# EUROPÄISCHE PATENTSCHRIFT

(11) **EP 3 038 319 B1**
(45) Veröffentlichungstag und Bekanntmachung des Hinweises auf die Patenterteilung: **14.02.2018**
(21) Anmeldenummer: 15195549.9
(22) Anmeldetag: 20.11.2015
(51) Int. Cl.: H04L 29/06

(54) **KOMMUNIKATIONSSYSTEM FÜR EINE INTERAKTIVE AVATAR-KOMMUNIKATION**
COMMUNICATION SYSTEM FOR AN INTERACTIVE AVATAR COMMUNICATION
SYSTÈME DE COMMUNICATION POUR UNE COMMUNICATION D'AVATAR INTERACTIVE

(30) Priorität: 23.12.2014 DE 102014119606
(43) Veröffentlichungstag der Anmeldung: 29.06.2016
(73) Patentinhaber: Deutsche Telekom AG, 53113 Bonn (DE)
(72) Erfinder: KÖPPEL, Simon, 68259 Mannheim (DE)
(74) Vertreter: Patentship Patentanwaltsgesellschaft mbH

(56) Entgegenhaltungen:
- US-A1- 2007 282 989
- US-A1- 2014 016 793

## Beschreibung

Die vorliegende Erfindung betrifft ein Kommunikationssystem und ein Kommunikationsverfahren für eine interaktive Avatar-Kommunikation. Ein Avatar bezeichnet hierbei eine künstliche Person oder eine Grafikfigur, die einem Kommunikationsteilnehmer in einer virtuellen Kommunikationswelt zugeordnet wird, und über welche eine reale Kommunikation zwischen einem Kommunikationsteilnehmer und einem anderen Kommunikationsteilnehmer gesteuert wird.

In virtuellen Besprechungsräumen können Teilnehmer angeordnet werden und entsprechend ihrer Sitzordnung kann die Akustik in Richtung ihrer Position verändert werden, um beispielsweise Telefonkonferenzen zu vereinfachen. Diese Anordnung ist jedoch nicht flexibel und muss gegebenenfalls manuell entsprechend den Wünschen der Teilnehmer geändert werden. Bei interaktiver Kommunikation vermittelt über den Teilnehmern zugeordnete Avatare, im Folgenden auch als interaktive Avatar-Kommunikation bezeichnet, die auch für Online-Computerspiele genutzt wird, ist eine visuelle oder akustische Kommunikation unter den Kommunikationsteilnehmern erlaubt. Dies wird üblicherweise durch einen integrierten Text-Chat oder durch Voice-over-IP (VolP) Clients ermöglicht. Meist sind bei einer interaktiven Avatar-Kommunikation dem Kommunikationsclient, z.B. einem PC, einer Xbox oder einer Play Station, die Positionen der eigenen Avatare bekannt und werden je nach Kommunikationsmodus lediglich ausgeblendet. Auch die Positionen der Avatare der anderen Kommunikationsclients sind zumindest bei Sichtkontakt innerhalb des virtuellen Kommunikationsraums bekannt. Innerhalb eines akustischen Clients kann die Kommunikation entweder mittels "Push-To-Talk" oder via "automatischer Erkennung" erfolgen. Bei "Push-To-Talk wird meistens die Shift-Taste gedrückt gehalten um mit anderen Kommunikationsteilnehmern zu reden, ähnlich der Walkie-Talkie Funktion eines Funkgeräts. Bei "automatischer Erkennung" wird das Gesprochene erst ab einer gewissen Lautstärke übertragen, um Hintergrundgeräusche bestmöglich auszublenden. Beide Arten der VolP-Kommunikation setzen die Verbindung zu einem VolP-Server voraus.

Bekannte interaktive Avatar-Kommunikationssysteme setzen in der Regel auf einem "Client-Server-Modell" auf. Hierbei legt der Server die Regeln und den Ablauf der Kommunikation fest. Er bestimmt die Standorte aller Avatare anhand der Achsen X, Y und Z, wertet etwaige Begegnungen im virtuellen Konferenzraum aus, wie auch deren Stärke und berechnet für jeden Avatar die von diesem verursachten Veränderungen der Gegebenheiten, wie beispielsweise eingestürzte Gebäude, Schlaglöcher im Boden oder Löcher in Glasscheiben. Der Server bestimmt auch die von einem Kommunikationsteilnehmer ausgehende Lautstärke und die Eingangslautstärke bei den anderen Kommunikationsteilnehmern. Die Ausgangslautstärke bleibt an Headset oder Client regelbar.

Bekannte interaktive Avatar-Kommunikationssysteme haben jedoch die im Folgenden dargestellten Nachteile. Der Text-Chat ist dem Sprachchat gegenüber im Nachteil, da der Kommunikationsteilnehmer während der Texteingabe nicht, oder nur bedingt handlungsfähig ist. Er benötigt seine Hände in dieser Zeit zum Eingeben der Nachricht. Die wenigsten Menschen sind in der Lage, in gleicher Geschwindigkeit zu schreiben, wie zu sprechen. Da die Nachricht auch gelesen werden muss, lenkt dies vom weiteren Ablauf der interaktiven Kommunikation ab. Auf Grund einer Zeichenbegrenzung in den meisten Chats, welche zur besseren Übersicht dient, lassen sich nicht oder nur schwer alle Inhalte in einer Nachricht darstellen. Auf Grund der Anzahl an Kommunikationsteilnehmern pro Gruppe, in der virtuellen Kommunikationswelt auch als Clan, Team, Gilde oder Squad bezeichnet, sinkt die Verständlichkeit parallel mit steigender Nutzerzahl. Sprechen also zunehmend mehr Kommunikationsteilnehmer gleichzeitig, sinkt die Verständlichkeit des Einzelnen entsprechend ab. Insbesondere bei Kommunikationssystemen mit einer großen Anzahl von Kommunikationsteilnehmern ist eine gleichzeitige Kommunikation innerhalb einer Gruppe auf Grund ihrer schieren Größe kaum machbar, geschweige denn innerhalb der gesamten Gemeinschaft.

Aufgrund der oben genannten Unzulänglichkeiten bei den bekannten interaktiven Avatar-Kommunikationssystemen verzichten viele Kommunikationsteilnehmer komplett auf den Chat und hören somit auch nicht, was andere sprechen. Andere Kommunikationsteilnehmer nutzen eigene Kommunikationskanäle, um unter sich zu sein und somit auch die Nutzerzahl gering zu halten, oder um Informationen nicht nach draußen dringen zu lassen, wo sie ggf. von Kommunikationsteilnehmern des gegnerischen Teams genutzt werden können.

US 2014/016793 A1 (GARDNER WILLIAM G [US]) 16. Januar 2014 beschreibt ein Verfahren zur Avatarkommunikation

US 2007/282989 A1 (MILSTEIN DAVID [US] ET AL) 6. Dezember 2007 beschreibt ein System zur Multiparty VolP kommunikation.

Es ist die Aufgabe der vorliegenden Erfindung, ein Konzept für eine einfache interaktive Avatar-Kommunikation zu schaffen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können zum Kommunizieren in virtuellen Welten verwendet werden. Als virtuelle Welt wird eine Welt bezeichnet, welche zumeist über den Computer und das Internet betreten werden kann. Als wichtiges Merkmal ist hier die simultane Partizipation mehrerer Nutzer kennzeichnend, die sich unabhängig voneinander im virtuellen Raum bewegen können. Die Intensität der Interaktion ist durch die jeweilige Ausprägung der Virtuellen Welt bedingt. Diese reicht von rein textbasierten Anwendungen bis hin zu komplexen, hochauflösenden, dreidimensionalen Umgebungen. Eine virtuelle Welt ist in der Regel Software-basiert, und es liegt entweder eine Client-Server- oder eine Peer-to-Peer-Architektur zugrunde. Der Benutzer interagiert mittels eines Avatars mit der virtuellen Welt.

Ein Avatar bezeichnet eine künstliche Person oder eine Grafikfigur, die einem Kommunikationsteilnehmer in der virtuellen Welt zugeordnet wird. In interaktiven Avatar-Kommunikationssystemen wird die einem Benutzer bzw. Kommunikationsteilnehmer zugeordnete Grafikfigur Avatar genannt. Sie kann von den Kommunikationsteilnehmern hochgeladen oder aus einer Liste ausgewählt werden und dient als optische Identifikationsfigur, die in der virtuellen Kommunikationswelt stellvertretend für den Kommunikationsteilnehmer angezeigt wird. Mit dem Begriff Avatar wird auch intelligente Software bezeichnet, mit der Anwender in natürlicher Sprache kommunizieren können. Sie beraten und unterstützen den Nutzer nicht nur im Internet, sondern auch in der Kommunikation mit technischen Systemen, wie beispielsweise an der Mensch-Maschine-Schnittstelle. Ein Avatar ist häufig mehr als ein statisches Bild. Basierend auf 3D-Echtzeit-Engines lassen sich Interaktionen grafisch darstellen. Neben einfachen Abläufen, bei denen der Benutzer die künstliche Figur durch virtuelle Welten führt, wie z.B., bei Second Life, werden Avatare vor allem in der audiovisuellen Kommunikation, bei Avatar-Video-Chats, Video-Services und virtuellen Stellvertretern genutzt.

Die im Folgenden vorgestellten Verfahren und Systeme nutzen Positionsdaten von Avataren. Die Positionen bzw. Positionsdaten der Avatare in der virtuellen Welt können durch Koordinaten, beispielsweise im kartesischen Koordinatensystem (x, y, z) oder im Polarkoordinatensystem beschrieben und in ihrer Eigenschaft als eindeutig betrachtet werden. Alle dreidimensionalen Welten unterliegen bestimmten physikalischen, sozialen und/oder biologischen Gesetzen, die vom Erfinder, Designer oder Entwickler der Software festgelegt werden. Hierbei wird häufig zu den eigens definierten Gesetzmäßigkeiten der realen Welt zurückgegriffen, um dem Benutzer eine intuitive Bedienung der Welt zu ermöglichen.

Die im Folgenden vorgestellten Verfahren und Systeme können zum Kommunizieren in Client-Server Systemen verwendet werden. Das Client-Server-Modell ist das Standardkonzept für die Verteilung von Aufgaben innerhalb eines Netzwerks. Aufgaben werden mittels Server auf verschiedene Rechner verteilt und können bei Bedarf von mehreren Clients zur Lösung ihrer eigenen Aufgaben oder Teilen davon angefordert werden. Bei den Aufgaben kann es sich um Standardaufgaben, wie beispielsweise E-Mail-Versand, E-Mail-Empfang, Web-Zugriff, etc. oder um spezifische Aufgaben einer Software oder eines Programms handeln. Eine Aufgabe wird im Client-Server-Modell als Dienst bezeichnet.

Ein Server ist ein Programm, das einen Dienst (Service) anbietet. Im Rahmen des Client-Server-Konzepts kann ein anderes Programm, der Client, diesen Dienst nutzen. Die Kommunikation zwischen Client und Server ist abhängig vom Dienst, d.h. der Dienst bestimmt, welche Daten zwischen beiden ausgetauscht werden. Der Server ist in Bereitschaft, um jederzeit auf die Kontaktaufnahme eines Clients reagieren zu können. Im Unterschied zum Client, der aktiv einen Dienst anfordert, verhält sich der Server passiv und wartet auf Anforderungen. Die Regeln der Kommunikation für einen Dienst, wie beispielsweise Format, Aufruf des Servers und die Bedeutung der zwischen Server und Client ausgetauschten Daten werden durch ein für den jeweiligen Dienst spezifisches Protokoll festgelegt.

Die im Folgenden vorgestellten Kommunikationskanäle zwischen Client-Server (auch als erste Kommunikationskanäle bezeichnet) oder Client-Client (auch als zweite Kommunikationskanäle bezeichnet) können auf drahtgebundenen Netzwerken basieren, beispielsweise unter Verwendung von Ethernet, USB, Kabel, etc. Die Kommunikationskanäle können auch auf drahtlosen Netzwerken basieren, beispielsweise unter Nutzung von WLAN, WiFi, Bluetooth, Infrarot oder anderen Nahbereichskommunikationsstandards. Als Protokolle zur Datenübertragung können beispielsweise Voice-over-IP (VolP) mittels IPv4 oder IPv6 genutzt werden. Die Kommunikationskanäle können mittels des öffentlichen Netzes aufgebaut werden, beispielsweise über das Internet, ein Telefonnetz eines Telefonbetreibers, z.B. ein drahtgebundenes Netz, wie beispielsweise ein POTS, ISDN, DSL oder Kabel-Netz oder ein drahtloses Netz, wie beispielsweise ein Mobilfunknetz eines Mobilfunkbetreibers, z.B. ein zelluläres Netz, beispielsweise unter Verwendung eines Mobilfunkstandards wie z.B. LTE, UMTS, GSM, etc. Als Protokolle zur Daten- oder Sprachübertragung über das Kommunikationsnetz können Voice-over-IP mittels IPv4 oder IPv6 genutzt werden oder ATM, STM oder andere Weitverkehrsstandards.

Die im Folgenden vorgestellten Kommunikationskanäle zwischen Client-Client bzw. die zweiten Kommunikationskanäle können auf TeamSpeak basieren. TeamSpeak ist eine proprietäre Sprachkonferenzsoftware, die den Benutzern ermöglicht, über das Internet oder ein LAN per Sprache und Text miteinander zu kommunizieren sowie Dateien auszutauschen. TeamSpeak in der Version 3 unterstützt das Vorlesen von eingegebenem Text. Bei einer Konferenzschaltung können die Teilnehmer in einem virtuellen Raum angeordnet werden, beispielsweise links, rechts, vorne, hinten, so dass es leichter fällt, dem Gespräch zu folgen. Dies funktioniert, sofern zwei oder mehr Ausgabekanäle vorhanden sind. Für Anwender stehen ferner Skins zur Personalisierung zur Verfügung. TeamSpeak unterstützt den latenzarmen Codec CELT. Dabei können Latenz und Qualität unabhängig voneinander konfiguriert werden. Weniger Latenz und mehr Qualität entsprechen jeweils mehr Bandbreite. Es können sich dabei Bitraten zwischen etwa 2,6 und 114 kbit/s ergeben.

Diverse Kommunikationsteilnehmer nutzen Sprachchat-Programme wie "TeamSpeak" oder "Ventrilo", um mit anderen Kommunikationsteilnehmern über ein Mikrofon zu kommunizieren, was das Zusammenwirken in Instanzen und in virtuellen Kommunikationsräumen vereinfacht. So gibt es dazu einen kommunikationsinternen Sprachchat, der auf dem gleichen Prinzip basiert, jedoch keine zusätzliche Software erfordert. Dieser Sprachchat kann z.B. von normalen Gruppen in virtuellen Kommunikationsräumen genutzt werden. Es können aber auch eigene Kanäle erstellt werden. Die aktive Nutzung kann auf eine gewisse Anzahl an Kommunikationsteilnehmern beschränkt sein, beispielsweise eine Anzahl von 40, das Mithören kann aber für mehr Kommunikationsteilnehmer möglich sein.

Bei Sprachchat-Programmen kann eine Auswahl erfolgen, um nur bestimmte und zuvor gewählte Gruppen anzusprechen. Beispielsweise ist es möglich, den Kommunikationsmodus "Schreien" zu wählen, um so die Reichweite des geschriebenen zu erhöhen oder den Kommunikationsmodus "Sprechen" zu wählen um eine normale von der Kommunikationssoftware vorgegebene Reichweite zu erreichen.

Bei anderen Sprachchat-Programmen haben Kommunikationsteilnehmer die Möglichkeiten, an das "Squad", das "Team" oder an "alle" zu schreiben. Ein "Squad" ist dabei eine von mehreren Untergruppen innerhalb eines von zwei Teams. Ein Squad kann beispielsweise über maximal 5 Mitglieder verfügen. Mit "Team" werden die Kommunikationsteilnehmer des eigenen Teams bezeichnet. Üblicherweise existieren in jeder Kommunikationssitzung zwei Teams. Der Begriff "Alle" umfasst das eigene und das andere bzw. gegnerische Team.

Der Server kann in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet.

Alternativ kann der Server auch auf einem der Clients vorgesehen sein. Bei einer großen Anzahl an Kommunikationsteilnehmern kann auch eine Mehrzahl von Servern vorgesehen sein, welche die Serverfunktionalität ausführen. Ein Client kann auch einer Mehrzahl von Kommunikationsteilnehmern zugeordnet sein, die sich den Client teilen.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung ein Kommunikationssystem für eine interaktive Avatar-Kommunikation, mit: einem Kommunikationsserver, der ausgelegt ist, eine Serversoftware zum Emulieren einer interaktiven Avatar-Kommunikation auszuführen; und einer Mehrzahl von Kommunikationsclients, die ausgelegt sind, je eine Clientsoftware zum Emulieren der interaktiven Avatar-Kommunikation auszuführen, wobei jeder Kommunikationsclient über eine erste Kommunikationssoftware verfügt und ausgelegt ist, mit der ersten Kommunikationssoftware eine erste Kommunikationsverbindung zu dem Kommunikationsserver zur Kommunikation mit dem Kommunikationsserver aufzubauen, wobei jeder Kommunikationsclient ferner über eine zweite Kommunikationssoftware verfügt und ausgelegt ist, mit der zweiten Kommunikationssoftware eine zweite Kommunikationsverbindung zu zumindest einem anderen Kommunikationsclient der Mehrzahl von Kommunikationsclients zur Kommunikation mit dem zumindest einen anderen Kommunikationsclient aufzubauen, und wobei jeder Kommunikationsclient ausgelegt ist, akustische Signale eines den jeweiligen Kommunikationsclient nutzenden Kommunikationsteilnehmers der interaktiven Avatar-Kommunikation zu empfangen und die empfangenen akustischen Signale basierend auf Positionsdaten eines Avatars der interaktiven Avatar-Kommunikation zu verändern, wobei der Avatar dem Kommunikationsteilnehmer zugeordnet ist und von der Serversoftware der interaktiven Avatar-Kommunikation auf dem Kommunikationsserver emuliert wird.

Ein solches Kommunikationssystem hat den Vorteil, dass es einfach zu realisieren ist und eine komfortable interaktive Kommunikation mit Hilfe von Avataren bietet. Dabei können Kommunikationsteilnehmer flexibel angesprochen werden, auch wenn sie nicht bestimmten, zuvor gewählten Gruppen angehören. Das Kommunikationssystem bietet eine Aussendung von akustischen Signalen mit variabler Reichweite.

In einer Ausführungsform des Kommunikationssystems gemäß dem ersten Aspekt ist der jeweilige Kommunikationsclient ausgelegt, einen Lautstärkepegel der empfangenen akustischen Signale des Kommunikationsteilnehmers basierend auf den Positionsdaten des entsprechenden Avatars zu regeln.

Dies bringt den Vorteil, dass Gegebenheiten des virtuellen Kommunikationsraums, in denen der Avatar positioniert ist, bei der Weiterleitung der akustischen Signale entsprechend berücksichtigt werden können, um so einen realistischen Klangeindruck zu vermitteln.

In einer Ausführungsform des Kommunikationssystems gemäß dem ersten Aspekt ist der jeweilige Kommunikationsclient ausgelegt, die Positionsdaten des entsprechenden Avatars von dem Kommunikationsserver zu empfangen und die veränderten akustischen Signale über die erste Kommunikationsverbindung an den Kommunikationsserver zu übertragen; und der Kommunikationsserver ist ausgelegt, die veränderten akustischen Signale an den zumindest einen anderen Kommunikationsclient zu übertragen.

Dies bringt den Vorteil, dass das Kommunikationssystem flexibel ausgeführt ist. Die Übertragung der veränderten akustischen Signale kann über den Kommunikationsserver erfolgen, beispielsweise, wenn zwischen dem jeweiligen Kommunikationsclient und dem anderen Kommunikationsclient keine zweite Kommunikationsverbindung aufgebaut ist, z.B. wenn der andere Kommunikationsclient einer anderen Gruppe als der jeweilige Kommunikationsclient angehört.

In einer Ausführungsform des Kommunikationssystems gemäß dem ersten Aspekt ist der jeweilige Kommunikationsclient ausgelegt, die Positionsdaten des entsprechenden Avatars von dem Kommunikationsserver zu empfangen und die veränderten akustischen Signale über die zweite Kommunikationsverbindung an den zumindest einen anderen Kommunikationsclient zu übertragen.

Dies bringt den Vorteil, dass das Kommunikationssystem flexibel ausgeführt ist. Die Übertragung der veränderten akustischen Signale kann über die zweite Kommunikationsverbindung zu dem anderen Kommunikationsclient erfolgen und damit unabhängig vom Kommunikationsserver erfolgen. Dies führt zu einer schnelleren, latenzreduzierten Kommunikation zwischen dem Kommunikationsclient und dem anderen Kommunikationsclient und ist insbesondere von Vorteil, wenn der Kommunikationsclient und der andere Kommunikationsclient einer gleichen Gruppe angehören.

In einer Ausführungsform des Kommunikationssystems gemäß dem ersten Aspekt ist der Kommunikationsserver ausgelegt, einen Lautstärkepegel der empfangenen akustischen Signale des Kommunikationsteilnehmers basierend auf den Positionsdaten des entsprechenden Avatars zu regeln.

Dies bringt den Vorteil, dass Gegebenheiten des virtuellen Kommunikationsraums, in denen der Avatar positioniert ist, bei der Weiterleitung der akustischen Signale entsprechend berücksichtigt werden können, um so einen realistischen Klangeindruck zu vermitteln.

In einer Ausführungsform des Kommunikationssystems gemäß dem ersten Aspekt ist der jeweilige Kommunikationsclient ausgelegt, die zweite Kommunikationsverbindung zu zumindest einem ausgewählten Kommunikationsclient der Mehrzahl von Kommunikationsclients aufzubauen, insbesondere zu ausgewählten Kommunikationsclients, deren Kommunikationsteilnehmer einer gleichen Gruppe angehören wie der Kommunikationsteilnehmer des jeweiligen Kommunikationsclients.

Dies bringt den Vorteil, dass bei der interaktiven Avatar-Kommunikation eine größere Menge an Teilnehmern mitwirken kann. Die Teilnehmer lassen sich in Gruppen einteilen, was die Zusammenhänge im der realen Welt widerspiegelt.

In einer Ausführungsform des Kommunikationssystems gemäß dem ersten Aspekt umfassen die Positionsdaten des dem Kommunikationsteilnehmer zugeordneten Avatars einen Abstand zu einem anderen Avatar der interaktiven Avatar-Kommunikation, wobei der andere Avatar einem Kommunikationsteilnehmer des zumindest einem anderen Kommunikationsclients zugeordnet ist.

Dies bringt den Vorteil, dass das akustische Signal eines Avatars in Abhängigkeit des Abstands zu einem anderen Avatar gedämpft werden kann, was die Gegebenheiten in der realen Welt widerspiegelt und so einen realistischen Klangeindruck vermittelt.

In einer Ausführungsform des Kommunikationssystems gemäß dem ersten Aspekt umfassen die Positionsdaten des dem Kommunikationsteilnehmer zugeordneten Avatars eine Richtung, in welcher der Avatar die empfangenen akustischen Signale des Kommunikationsteilnehmers in einem von der Serversoftware der interaktiven Avatar-Kommunikation emulierten virtuellen Kommunikationsraum abgibt.

Dies bringt den Vorteil, dass das akustische Signal eines Avatars in Abhängigkeit der Richtung, in der sich der Avatar befindet, abgestrahlt werden kann. Damit erfahren vor dem Avatar stehende andere Avatare einen höheren Signalpegel als hinter dem Avatar stehende andere Avatare. Dies spiegelt die Gegebenheiten in der realen Welt wider und vermittelt so einen realistischen Klangeindruck.

In einer Ausführungsform des Kommunikationssystems gemäß dem ersten Aspekt umfassen die Positionsdaten des dem Kommunikationsteilnehmer zugeordneten Avatars eine Reichweite, bis zu der die von dem Avatar abgegebenen akustischen Signale in dem virtuellen Kommunikationsraum erfassbar sind.

Dies bringt den Vorteil, dass das akustische Signal eines Avatars in Abhängigkeit der Reichweite gedämpft werden kann, was der realen Ausbreitung von Schallwellen entspricht und so einen realistischen Klangeindruck vermittelt.

In einer Ausführungsform des Kommunikationssystems gemäß dem ersten Aspekt stellen die Positionsdaten des dem Kommunikationsteilnehmer zugeordneten Avatars Umgebungsinformationen des Avatars in dem virtuellen Kommunikationsraum dar, insbesondere Gegenstände, die sich in dem virtuellen Kommunikationsraum zwischen dem Avatar und dem anderen Avatar befinden.

Dies bringt den Vorteil, dass das akustische Signal eines Avatars in Abhängigkeit der Umgebung des virtuellen Kommunikationsraums, in dem sich der Avatar befindet, verändert werden kann. Damit wird ein realistischer Klangeindruck vermittelt.

In einer Ausführungsform des Kommunikationssystems gemäß dem ersten Aspekt ist die erste Kommunikationssoftware zum Aufbau der ersten Kommunikationsverbindung in die Clientsoftware zum Emulieren der interaktiven Avatar-Kommunikation integriert.

Dies bringt den Vorteil, dass nur ein Softwarepaket installiert werden muss und keine Kompatibilitätsprobleme entstehen können.

In einer Ausführungsform des Kommunikationssystems gemäß dem ersten Aspekt ist die zweite Kommunikationssoftware zum Aufbau der zweiten Kommunikationsverbindung separat zu der Clientsoftware zum Emulieren der interaktiven Avatar-Kommunikation ausgeführt.

Dies bringt den Vorteil, dass die zweite Kommunikationssoftware nur dann installiert werden braucht, wenn eine separate Verbindung zu einem anderen Kommunikationsteilnehmer gewünscht ist. Andernfalls kann die Kommunikation mit dem anderen Kommunikationsteilnehmer auch über den Kommunikationsserver erfolgen.

In einer Ausführungsform des Kommunikationssystems gemäß dem ersten Aspekt umfassen die empfangenen akustischen Signale Mehrkanalsignale, insbesondere Stereosignale.

Die bringt den Vorteil, dass mit Mehrwegsignalen ein besonders guter Klangeindruck und eine räumliche Richtungswahrnehmung erzeugt werden kann.

In einer Ausführungsform des Kommunikationssystems gemäß dem ersten Aspekt umfasst die zweite Kommunikationsverbindung eine Voice-over-IP Kommunikationsverbindung.

Dies bringt den Vorteil, dass eine Voice-over-IP Kommunikationsverbindung leicht initiiert werden kann, da sie in vielen Kommunikationsprotokollen als Standard genutzt wird.

Gemäß einem zweiten Aspekt betrifft die Erfindung ein Kommunikationssystem für eine interaktive Avatar-Kommunikation, mit: einem Kommunikationsserver, der ausgelegt ist, eine Serversoftware zum Emulieren einer interaktiven Avatar-Kommunikation auszuführen; und einer Mehrzahl von Kommunikationsclients, die ausgelegt sind, je eine Clientsoftware zum Emulieren der interaktiven Avatar-Kommunikation auszuführen, wobei jeder Kommunikationsclient über eine erste Kommunikationssoftware verfügt und ausgelegt ist, mit der ersten Kommunikationssoftware eine erste Kommunikationsverbindung zu dem Kommunikationsserver zur Kommunikation mit dem Kommunikationsserver aufzubauen, wobei jeder Kommunikationsclient ferner über eine zweite Kommunikationssoftware verfügt und ausgelegt ist, mit der zweiten Kommunikationssoftware eine zweite Kommunikationsverbindung zu zumindest einem anderen Kommunikationsclient der Mehrzahl von Kommunikationsclients zur Kommunikation mit dem zumindest einen anderen Kommunikationsclient aufzubauen, wobei jeder Kommunikationsclient ausgelegt ist, akustische Signale eines den jeweiligen Kommunikationsclient nutzenden Kommunikationsteilnehmers der interaktiven Avatar-Kommunikation zu empfangen und die empfangenen akustischen Signale über die erste Kommunikationsverbindung zu dem Kommunikationsserver zu übertragen, und wobei der Kommunikationsserver ausgelegt ist, die empfangenen akustischen Signale basierend auf Positionsdaten eines Avatars der interaktiven Avatar-Kommunikation zu verändern und die veränderten akustischen Signale an den zumindest einen anderen Kommunikationsclient zu übertragen, wobei der Avatar dem Kommunikationsteilnehmer zugeordnet ist und von der Serversoftware der interaktiven Avatar-Kommunikation auf dem Kommunikationsserver emuliert wird.

Ein solches Kommunikationssystem hat den Vorteil, dass es einfach zu realisieren ist und eine komfortable interaktive Kommunikation mit Hilfe von Avataren bietet. Dabei können Kommunikationsteilnehmer flexibel angesprochen werden, auch wenn sie nicht bestimmten, zuvor gewählten Gruppen angehören. Das Kommunikationssystem bietet eine Aussendung von akustischen Signalen mit variabler Reichweite. Das Kommunikationssystem kann flexibel ausgeführt sein ist. Wenn die von den Clients empfangenen akustischen Signale an den Server übertragen werden und von dem Server entsprechend den Positionsdaten verändert werden, kann die Übertragung über den Server laufen, so dass keine zusätzlichen direkten Kommunikationsverbindungen zwischen zwei Clients erforderlich sind. Dies vereinfacht die Architektur des Kommunikationssystems und macht es weniger fehleranfällig. Alternativ kann aber auch die Übertragung der veränderten akustischen Signale über die zweite Kommunikationsverbindung und damit unter Umgehung des Servers direkt zu dem anderen Kommunikationsclient erfolgen und damit unabhängig vom Kommunikationsserver erfolgen. Dies führt zu einer schnelleren, latenzreduzierten Kommunikation zwischen dem Kommunikationsclient und dem anderen Kommunikationsclient und ist insbesondere von Vorteil, wenn der Kommunikationsclient und der andere Kommunikationsclient einer gleichen Gruppe angehören.

In einer Ausführungsform des Kommunikationssystems gemäß dem zweiten Aspekt ist der Kommunikationsserver ausgelegt, einen Lautstärkepegel der empfangenen akustischen Signale des Kommunikationsteilnehmers basierend auf den Positionsdaten des entsprechenden Avatars zu regeln.

Dies bringt den Vorteil, dass Gegebenheiten des virtuellen Kommunikationsraums, in denen der Avatar positioniert ist, bei der Weiterleitung der akustischen Signale entsprechend berücksichtigt werden können, um so einen realistischen Klangeindruck zu vermitteln.

In einer Ausführungsform des Kommunikationssystems gemäß dem zweiten Aspekt ist der jeweilige Kommunikationsclient ausgelegt, die zweite Kommunikationsverbindung zu zumindest einem ausgewählten Kommunikationsclient der Mehrzahl von Kommunikationsclients aufzubauen, insbesondere zu ausgewählten Kommunikationsclients, deren Kommunikationsteilnehmer einer gleichen Gruppe angehören wie der Kommunikationsteilnehmer des jeweiligen Kommunikationsclients.

Dies bringt den Vorteil, dass bei der interaktiven Avatar-Kommunikation eine größere Menge an Teilnehmern mitwirken kann. Die Teilnehmer lassen sich in Gruppen einteilen, was die Zusammenhänge im der realen Welt widerspiegelt.

In einer Ausführungsform des Kommunikationssystems gemäß dem zweiten Aspekt umfassen die Positionsdaten des dem Kommunikationsteilnehmer zugeordneten Avatars einen Abstand zu einem anderen Avatar der interaktiven Avatar-Kommunikation, wobei der andere Avatar einem Kommunikationsteilnehmer des zumindest einem anderen Kommunikationsclients zugeordnet ist.

Dies bringt den Vorteil, dass das akustische Signal eines Avatars in Abhängigkeit des Abstands zu einem anderen Avatar gedämpft werden kann, was die Gegebenheiten in der realen Welt widerspiegelt und so einen realistischen Klangeindruck vermittelt.

In einer Ausführungsform des Kommunikationssystems gemäß dem zweiten Aspekt umfassen die Positionsdaten des dem Kommunikationsteilnehmer zugeordneten Avatars eine Richtung, in welcher der Avatar die empfangenen akustischen Signale des Kommunikationsteilnehmers in einem von der Serversoftware der interaktiven Avatar-Kommunikation emulierten virtuellen Kommunikationsraum abgibt.

Dies bringt den Vorteil, dass das akustische Signal eines Avatars in Abhängigkeit der Richtung, in der sich der Avatar befindet, abgestrahlt werden kann. Damit erfahren vor dem Avatar stehende andere Avatare einen höheren Signalpegel als hinter dem Avatar stehende andere Avatare. Dies spiegelt die Gegebenheiten in der realen Welt wider und vermittelt so einen realistischen Klangeindruck.

In einer Ausführungsform des Kommunikationssystems gemäß dem zweiten Aspekt umfassen die Positionsdaten des dem Kommunikationsteilnehmer zugeordneten Avatars eine Reichweite, bis zu der die von dem Avatar abgegebenen akustischen Signale in dem virtuellen Kommunikationsraum erfassbar sind.

Dies bringt den Vorteil, dass das akustische Signal eines Avatars in Abhängigkeit der Reichweite gedämpft werden kann, was der realen Ausbreitung von Schallwellen entspricht und so einen realistischen Klangeindruck vermittelt.

In einer Ausführungsform des Kommunikationssystems gemäß dem zweiten Aspekt stellen die Positionsdaten des dem Kommunikationsteilnehmer zugeordneten Avatars Umgebungsinformationen des Avatars in dem virtuellen Kommunikationsraum dar, insbesondere Gegenstände, die sich in dem virtuellen Kommunikationsraum zwischen dem Avatar und dem anderen Avatar befinden.

Dies bringt den Vorteil, dass das akustische Signal eines Avatars in Abhängigkeit der Umgebung des virtuellen Kommunikationsraums, in dem sich der Avatar befindet, verändert werden kann. Damit wird ein realistischer Klangeindruck vermittelt.

In einer Ausführungsform des Kommunikationssystems gemäß dem zweiten Aspekt ist die erste Kommunikationssoftware zum Aufbau der ersten Kommunikationsverbindung in die Clientsoftware zum Emulieren der interaktiven Avatar-Kommunikation integriert.

Dies bringt den Vorteil, dass nur ein Softwarepaket installiert werden muss und keine Kompatibilitätsprobleme entstehen können.

In einer Ausführungsform des Kommunikationssystems gemäß dem zweiten Aspekt ist die zweite Kommunikationssoftware zum Aufbau der zweiten Kommunikationsverbindung separat zu der Clientsoftware zum Emulieren der interaktiven Avatar-Kommunikation ausgeführt.

Dies bringt den Vorteil, dass die zweite Kommunikationssoftware nur dann installiert werden braucht, wenn eine separate Verbindung zu einem anderen Kommunikationsteilnehmer gewünscht ist. Andernfalls kann die Kommunikation mit dem anderen Kommunikationsteilnehmer auch über den Kommunikationsserver erfolgen.

In einer Ausführungsform des Kommunikationssystems gemäß dem zweiten Aspekt umfassen die empfangenen akustischen Signale Mehrkanalsignale, insbesondere Stereosignale.

Die bringt den Vorteil, dass mit Mehrwegsignalen ein besonders guter Klangeindruck und eine räumliche Richtungswahrnehmung erzeugt werden kann.

In einer Ausführungsform des Kommunikationssystems gemäß dem zweiten Aspekt umfasst die zweite Kommunikationsverbindung eine Voice-over-IP Kommunikationsverbindung.

Dies bringt den Vorteil, dass eine Voice-over-IP Kommunikationsverbindung leicht initiiert werden kann, da sie in vielen Kommunikationsprotokollen als Standard genutzt wird.

Gemäß einem dritten Aspekt betrifft die Erfindung ein Kommunikationsverfahren für eine interaktive Avatar-Kommunikation, mit: Ausführen einer Serversoftware zum Emulieren einer interaktiven Avatar-Kommunikation auf einem Kommunikationsserver; Ausführen einer jeweiligen Clientsoftware zum Emulieren der interaktiven Avatar-Kommunikation auf einer Mehrzahl von Kommunikationsclients; Aufbauen einer ersten Kommunikationsverbindung zu dem Kommunikationsserver durch jeden der Kommunikationsclients mit einer ersten Kommunikationssoftware zur Kommunikation mit dem Kommunikationsserver; Aufbauen einer zweiten Kommunikationsverbindung zu zumindest einem anderen Kommunikationsclient der Mehrzahl von Kommunikationsclients mit einer zweiten Kommunikationssoftware des jeweiligen Kommunikationsclients zur Kommunikation mit dem zumindest einen anderen Kommunikationsclient; Empfangen von akustischen Signale eines den jeweiligen Kommunikationsclient nutzenden Kommunikationsteilnehmers der interaktiven Avatar-Kommunikation durch den jeweiligen Kommunikationsclient; Verändern der empfangenen akustischen Signale basierend auf Positionsdaten eines Avatars der interaktiven Avatar-Kommunikation, wobei der Avatar dem Kommunikationsteilnehmer zugeordnet ist und von der Serversoftware der interaktiven Avatar-Kommunikation auf dem Kommunikationsserver emuliert wird; und Übertragen der veränderten akustischen Signale an den zumindest einen anderen Kommunikationsclient.

Ein solches Kommunikationsverfahren hat den Vorteil, dass es einfach zu realisieren ist und eine komfortable interaktive Kommunikation mit Hilfe von Avataren bietet. Dabei können Kommunikationsteilnehmer flexibel angesprochen werden, auch wenn sie nicht bestimmten, zuvor gewählten Gruppen angehören. Ein solches Kommunikationsverfahren bietet die gleichen Vorteile wie bereits oben zu dem Kommunikationssystem gemäß dem ersten Aspekt und dem zweiten Aspekt der Erfindung angegeben.

In einer Ausführungsform des Kommunikationsverfahrens gemäß dem dritten Aspekt umfasst das Verfahren ein Regeln eines Lautstärkepegels der empfangenen akustischen Signale des Kommunikationsteilnehmers basierend auf den Positionsdaten des entsprechenden Avatars durch den Kommunikationsserver.

In einer Ausführungsform des Kommunikationsverfahrens gemäß dem dritten Aspekt umfasst das Verfahren ein Aufbauen der zweiten Kommunikationsverbindung zu zumindest einem ausgewählten Kommunikationsclient der Mehrzahl von Kommunikationsclients durch den jeweiligen Kommunikationsclient, insbesondere zu ausgewählten Kommunikationsclients, deren Kommunikationsteilnehmer einer gleichen Gruppe angehören wie der Kommunikationsteilnehmer des jeweiligen Kommunikationsclients.

In einer Ausführungsform des Kommunikationsverfahrens gemäß dem dritten Aspekt umfassen die Positionsdaten des dem Kommunikationsteilnehmer zugeordneten Avatars einen Abstand zu einem anderen Avatar der interaktiven Avatar-Kommunikation, wobei der andere Avatar einem Kommunikationsteilnehmer des zumindest einem anderen Kommunikationsclients zugeordnet ist.

In einer Ausführungsform des Kommunikationsverfahrens gemäß dem dritten Aspekt umfassen die Positionsdaten des dem Kommunikationsteilnehmer zugeordneten Avatars eine Richtung, in welcher der Avatar die empfangenen akustischen Signale des Kommunikationsteilnehmers in einem von der Serversoftware der interaktiven Avatar-Kommunikation emulierten virtuellen Kommunikationsraum abgibt.

In einer Ausführungsform des Kommunikationsverfahrens gemäß dem dritten Aspekt umfassen die Positionsdaten des dem Kommunikationsteilnehmer zugeordneten Avatars eine Reichweite, bis zu der die von dem Avatar abgegebenen akustischen Signale in dem virtuellen Kommunikationsraum erfassbar sind.

In einer Ausführungsform des Kommunikationsverfahrens gemäß dem dritten Aspekt stellen die Positionsdaten des dem Kommunikationsteilnehmer zugeordneten Avatars Umgebungsinformationen des Avatars in dem virtuellen Kommunikationsraum dar, insbesondere Gegenstände, die sich in dem virtuellen Kommunikationsraum zwischen dem Avatar und dem anderen Avatar befinden.

In einer Ausführungsform des Kommunikationsverfahrens gemäß dem dritten Aspekt ist die erste Kommunikationssoftware zum Aufbau der ersten Kommunikationsverbindung in die Clientsoftware zum Emulieren der interaktiven Avatar-Kommunikation integriert.

In einer Ausführungsform des Kommunikationsverfahrens gemäß dem dritten Aspekt ist die zweite Kommunikationssoftware zum Aufbau der zweiten Kommunikationsverbindung separat zu der Clientsoftware zum Emulieren der interaktiven Avatar-Kommunikation ausgeführt.

In einer Ausführungsform des Kommunikationsverfahrens gemäß dem dritten Aspekt umfassen die empfangenen akustischen Signale Mehrkanalsignale, insbesondere Stereosignale.

In einer Ausführungsform des Kommunikationsverfahrens gemäß dem dritten Aspekt umfasst die zweite Kommunikationsverbindung eine Voice-over-IP Kommunikationsverbindung.

Diese hier genannten Ausführungsformen des Kommunikationsverfahrens bieten die gleichen Vorteile wie bereits oben zu dem Kommunikationssystem gemäß dem ersten Aspekt und dem zweiten Aspekt der Erfindung angegeben.

Weitere Ausführungsbeispiele werden Bezug nehmend auf die beiliegenden Zeichnungen erläutert. Es zeigen:
Fig. 1 eine schematische Darstellung der Topologie eines Kommunikationssystems 100 für eine interaktive Avatar-Kommunikation gemäß einer ersten Ausführungsform;
Fig. 2 eine schematische Darstellung der Topologie eines Kommunikationssystems 200 für eine interaktive Avatar-Kommunikation gemäß einer zweiten Ausführungsform;
Fig. 3 eine schematische Darstellung der Topologie eines Kommunikationssystems 300 für eine interaktive Avatar-Kommunikation gemäß einer dritten Ausführungsform;
Fig. 4 eine schematische Darstellung der Topologie eines Kommunikationssystems 400 für eine interaktive Avatar-Kommunikation gemäß einer vierten Ausführungsform; und
Fig. 5 eine schematische Darstellung eines Kommunikationsverfahrens 500 für eine interaktive Avatar-Kommunikation gemäß einer Ausführungsform;

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

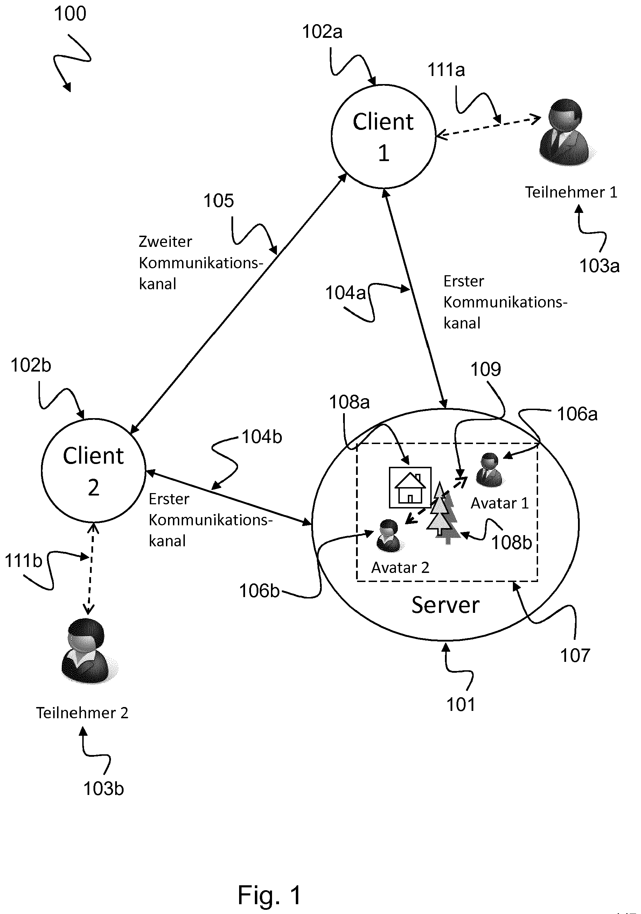

Fig. 1 zeigt eine schematische Darstellung der Topologie eines Kommunikationssystems 100 für eine interaktive Avatar-Kommunikation gemäß einer ersten Ausführungsform.

Das Kommunikationssystem 100 umfasst einen Kommunikationsserver 101 und eine Mehrzahl von Kommunikationsclients 102a, 102b, wobei in Fig. 1 zwei solcher Clients 102a, 102b dargestellt sind. Es kann jedoch auch jede andere Anzahl an Clients vorhanden sein. Der Kommunikationsserver 101 ist dazu ausgelegt, eine Serversoftware zum Emulieren einer interaktiven Avatar-Kommunikation auszuführen. Die Kommunikationsclients 102a, 102b sind dazu ausgelegt, je eine Clientsoftware zum Emulieren der interaktiven Avatar-Kommunikation auszuführen. Jeder Kommunikationsclient 102a, 102b verfügt über eine erste Kommunikationssoftware, um damit eine erste Kommunikationsverbindung 104a, 104b zu dem Kommunikationsserver 101 zur Kommunikation mit dem Kommunikationsserver 101 aufzubauen. Der Aufbau der ersten Kommunikationsverbindungen 104a, 104b kann auch vom Kommunikationsserver 101 aus initiiert werden. Jeder Kommunikationsclient 102a, 102b verfügt ferner über eine zweite Kommunikationssoftware, um damit eine zweite Kommunikationsverbindung 105 zu zumindest einem anderen Kommunikationsclient, beispielsweise dem Client 2, 102b zur Kommunikation mit diesem anderen Kommunikationsclient 102b aufzubauen.

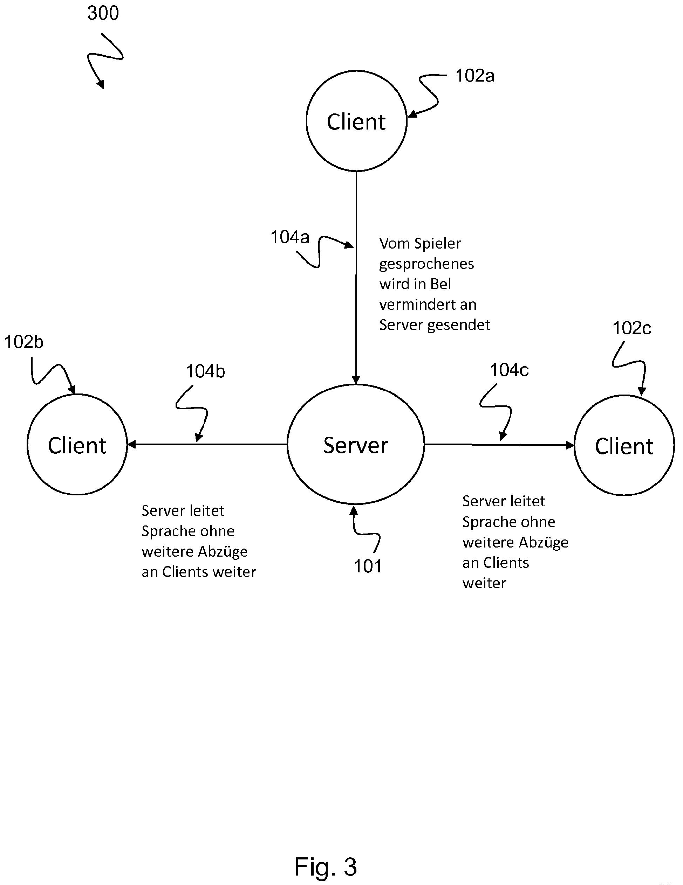

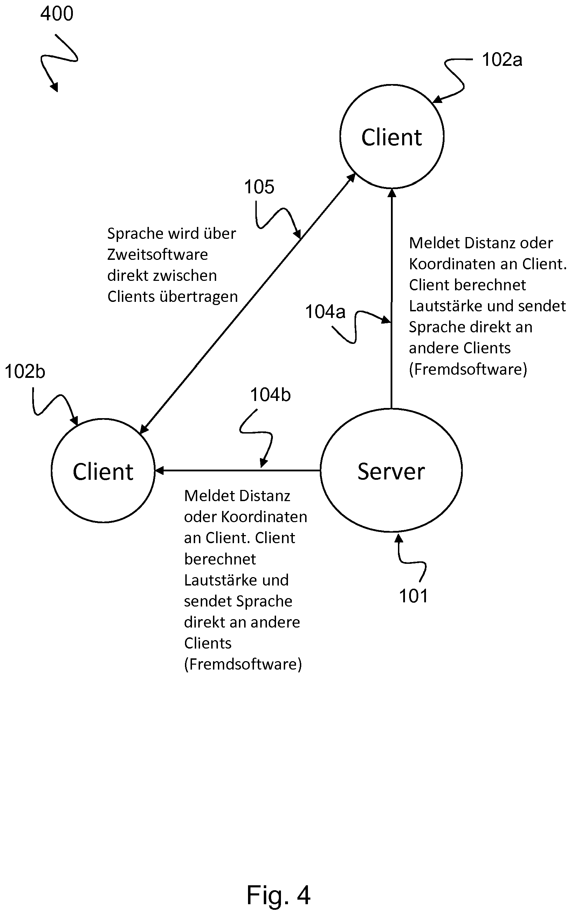

Jeder Kommunikationsclient 102a kann dazu ausgelegt sein, akustische Signale 111a eines den jeweiligen Kommunikationsclient 102a nutzenden Kommunikationsteilnehmers 103a der interaktiven Avatar-Kommunikation zu empfangen und die empfangenen akustischen Signale 111a basierend auf Positionsdaten eines Avatars 106a der interaktiven Avatar-Kommunikation zu verändern, wie weiter unten zu den Figuren 3 und 4 näher beschrieben. Hierbei ist der Avatar 106a dem Kommunikationsteilnehmer 103a zugeordnet. Der Avatar 106a kann von der Serversoftware der interaktiven Avatar-Kommunikation auf dem Kommunikationsserver 101 emuliert werden.

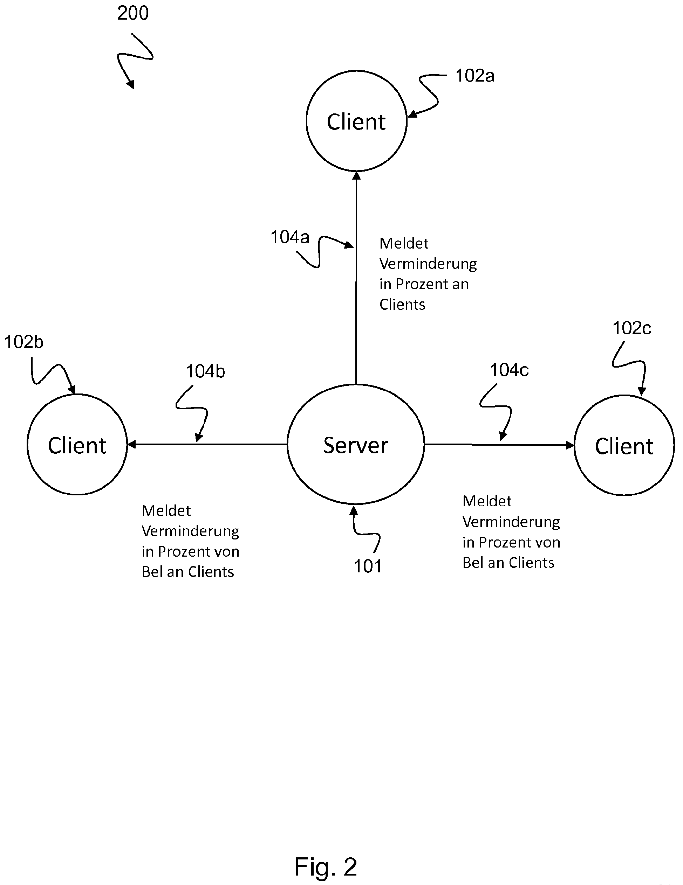

Alternativ kann jeder Kommunikationsclient 102a ausgelegt sein, akustische Signale 111a eines den jeweiligen Kommunikationsclient 102a nutzenden Kommunikationsteilnehmers 103a der interaktiven Avatar-Kommunikation zu empfangen und die empfangenen akustischen Signale 111a über die erste Kommunikationsverbindung 104a zu dem Kommunikationsserver 101 zu übertragen. Der Kommunikationsserver 101 kann in diesem Fall die empfangenen akustischen Signale 111a basierend auf Positionsdaten eines Avatars 106a der interaktiven Avatar-Kommunikation verändern und die veränderten akustischen Signale an den anderen Kommunikationsclient 102b übertragen, wie weiter unten zu Figur 2 näher beschrieben. Der Avatar 106a kann dem Kommunikationsteilnehmer 103a zugeordnet sein und von der Serversoftware der interaktiven Avatar-Kommunikation auf dem Kommunikationsserver 101 emuliert werden.

Positionsdaten eines Avatars können hierbei sämtliche Daten bezeichnen, die eine Zuordnung des Avatars in dem oder bezüglich des von der Server-Software emulierten virtuellen Kommunikationsraumes angeben. Positionsdaten eines Avatars können zusätzlich Daten über die Umgebung des Avatars in dem virtuellen Kommunikationsraum umfassen.

Der jeweilige Kommunikationsclient 102a, 102b kann einen Lautstärkepegel der empfangenen akustischen Signale 111a, 111b des Kommunikationsteilnehmers 103a, 103b basierend auf den Positionsdaten des entsprechenden Avatars 106a, 106b regeln.

Der jeweilige Kommunikationsclient 102a, 102b kann die Positionsdaten des entsprechenden Avatars 106a, 106b von dem Kommunikationsserver 101 empfangen und die veränderten akustischen Signale 111a, 111b über die erste Kommunikationsverbindung 104a, 104b an den Kommunikationsserver 101 übertragen.

Der Kommunikationsserver 101 kann die veränderten akustischen Signale dann an den anderen Kommunikationsclient 102b übertragen.

Der jeweilige Kommunikationsclient 102a, 102b kann die Positionsdaten des entsprechenden Avatars 106a, 106b von dem Kommunikationsserver 101 empfangen und die veränderten akustischen Signale über die zweite Kommunikationsverbindung 105 an den zumindest einen anderen Kommunikationsclient 102b übertragen.

Der Kommunikationsserver 101 kann einen Lautstärkepegel der empfangenen akustischen Signale 111a, 111b des Kommunikationsteilnehmers 103a, 103b basierend auf den Positionsdaten des entsprechenden Avatars 106a, 106b regeln.

Der jeweilige Kommunikationsclient kann die zweite Kommunikationsverbindung 105 zu zumindest einem ausgewählten Kommunikationsclient 102b aufbauen, insbesondere zu ausgewählten Kommunikationsclients 102b, deren Kommunikationsteilnehmer 103b einer gleichen Gruppe angehören wie der Kommunikationsteilnehmer 103a des jeweiligen Kommunikationsclients 102a.

Die Positionsdaten des dem Kommunikationsteilnehmer 103a zugeordneten Avatars 106a können einen Abstand zu einem anderen Avatar 106b der interaktiven Avatar-Kommunikation umfassen. Dabei kann der andere Avatar 106b einem Kommunikationsteilnehmer 103b des anderen Kommunikationsclients 102b zugeordnet sein.

Die Positionsdaten des dem Kommunikationsteilnehmer 103a zugeordneten Avatars 106a können ferner eine Richtung umfassen, in welcher der Avatar 106a die empfangenen akustischen Signale 111a des Kommunikationsteilnehmers 103a in einem von der Serversoftware der interaktiven Avatar-Kommunikation emulierten virtuellen Kommunikationsraum 107 abgibt.

Die Positionsdaten des dem Kommunikationsteilnehmer 103a zugeordneten Avatars 106a können eine Reichweite umfassen, bis zu der die von dem Avatar 106a abgegebenen akustischen Signale 109 in dem virtuellen Kommunikationsraum 107 erfassbar sind.

Die Positionsdaten des dem Kommunikationsteilnehmer 103a zugeordneten Avatars 106a können Umgebungsinformationen des Avatars 106a in dem virtuellen Kommunikationsraum 107 darstellen, insbesondere Gegenstände 108a, 108b, die sich in dem virtuellen Kommunikationsraum 107 zwischen dem Avatar 106a und dem anderen Avatar 106b befinden.

Die erste Kommunikationssoftware zum Aufbau der ersten Kommunikationsverbindung 104a, 104b kann in die Clientsoftware zum Emulieren der interaktiven Avatar-Kommunikation integriert sein. Die zweite Kommunikationssoftware zum Aufbau der zweiten Kommunikationsverbindung 105 kann separat zu der Clientsoftware zum Emulieren der interaktiven Avatar-Kommunikation ausgeführt sein.

Die empfangenen akustischen Signale 111a, 111b können Mehrkanalsignale, insbesondere Stereosignale umfassen, um damit einen Raumeindruck hervorzurufen. Die zweite Kommunikationsverbindung 105 kann eine Voice-over-IP Kommunikationsverbindung umfassen.

Der Kommunikationsserver 101 kann die Koordinaten der anderen Avatare, d.h. der den anderen Kommunikationsteilnehmern zugeordneten Avatare, an die Clients melden. Die Koordinaten der anderen Avatare können für eine gewisse Dauer, die beispielsweise von einem Bewegungsablauf oder einer Szene oder einer Dauer des akustischen Signals abhängig sein kann, auf einer kleinen Übersichtskarte schematisch angezeigt werden. Die Position kann bei Verstummen umgehend verschwinden. Der Client kann darauf basierend die Distanz und die Abzüge selbst berechnen und diese direkt an die anderen Clients weiterleiten, beispielsweise über die zweite Kommunikationsverbindung oder über die erste Kommunikationsverbindung.

Ein Radius kann von einer Person ausgehend definiert sein. Gegenstände können einen Einfluss ausüben, z.B. auf Ton, Reichweite, Hall. Gegenstände können in der Emulation der virtuellen Avatar-Kommunikation aus fester Materie bestehen und beispielsweise Hindernisse oder Widerstände darstellen. Gegenstände können die Avatars beeinflussen; Gegenstände können sich auch während der Zeit verändern oder verschwinden.

Die Ausgangslautstärke ist ein Hauptfaktor bei der Reichweitenfindung. Die Richtung in die gesprochen wird, wird auf größere Distanz und lauter ankommend beschallt, als diese von der der Avatar abgewandt steht.

Die virtuellen Landkarten in einer virtuellen Kommunikationswelt können auf den Meter genau vermessen sein. Zur Umsetzung der Berechnung der Änderung der akustischen Signale kann auf bereits bekannte Messprotokolle zurückgegriffen werden, um die jeweiligen Größen in Dezibel (Bel) hinter/vor Bäumen, Wänden, Hügeln, Fenstern usw. festzulegen und mit einem Restwert nach Abzug von Verlust auf Distanz oder Hindernissen zu versehen.

Die Änderung des akustischen Signals kann mit den Methoden der Schallfeldausbreitung berechnet werden. Mit Schallausbreitung bezeichnet man hierbei die Wellenerscheinung, die zur Fortpflanzung einer Druckstörung sowie der Übertragung des Schallwechseldrucks in einem Schallfeld führt. Zur Ausbreitung von Schall kann ein elastisches Medium in der interaktiven Avatar-Kommunikation nachgebildet werden. In Gasen und Flüssigkeiten breitet sich der Schall als Longitudinalwelle aus, in festen Medien auch in Form von Transversalwellen und Biegewellen. Schall breitet sich in einem homogenen schallleitenden Medium nach allen Richtungen symmetrisch vom Erreger, d.h. von der Schallquelle weg aus. Bewegt sich der Erreger im Medium oder bewegt sich das Medium um den Erreger, so tritt der Dopplereffekt auf. Treffen mehrere Schallwellen aufeinander, so überlagern sie sich. An Grenzflächen zwischen verschiedenen Medien ändern sich die Eigenschaften der Schallwelle. Insbesondere treten Absorption und Reflexion sowie Brechung auf. Diese Effekte können von dem Kommunikationsserver bzw. den Kommunikationsclients berücksichtigt werden, um eine Änderung der Positionsdaten basierend auf Gegebenheiten des virtuellen Kommunikationsraums zu bestimmen.

Das Kommunikationssystem 100 zur interaktiven Avatar-Kommunikation lässt sich beispielsweise durch eine interaktive Kommunikationsplattform realisieren, welche die folgenden Komponenten umfasst: Software für die interaktive Avatar-Kommunikation; Kommunikationssoftware separat oder in die interaktive Avatar-Kommunikation integriert. Hardware für die interaktive Avatar-Kommunikation, beispielsweise in Kombination mit der interaktiven Avatar-Kommunikation eine lauffähige Konsole, z.B. eine Xbox verschiedener Generationen, eine Playstation verschiedener Generationen, eine Steambox verschiedener Konfigurationen, ein Computer oder Laptop oder Mac-Rechner mit ausreichender Leistung, ein Headset umfassend Mikrofon und Kopfhörer. Ferner eine bestehende Anbindung an das Internet, um mit anderen Kommunikationsteilnehmern in Kontakt zu treten und um eine interaktive Avatar-Kommunikation im Mehrfachteilnehmermodus durchführen zu können. Ein dezentraler Kommunikationsserver kann den Standort des Kommunikationsteilnehmers melden und die Reichweite zwischen den Kommunikationsteilnehmern vermitteln.

Der Kommunikationsclient 102a, 102b kann zum Empfangen der akustischen Signale des entsprechenden Kommunikationsteilnehmers 103a, 103b über eine PlayStation Kamera verfügen, mit der gleichzeitig akustische wie visuelle Signale aufgezeichnet werden können. Mit einem solchen Dual-Kamera-System kann eine Tiefenwahrnehmung der Umgebung erzielt werden. Alternativ können die beiden Kameras für voneinander unterschiedliche Aufgaben zum Einsatz kommen. Zum Beispiel kann ein Sensor zur Bewegungserkennung verwendet werden und die zweite Kamera simultan einen Videomitschnitt aufzeichnen. Die beiden Kameras können jeweils HD-Auflösungen unterstützen sowie beispielsweise eine maximale Bildrate von 240 Bildern pro Sekunde. Zusätzlich können vier Mikrofone (Mikrofon mit 4 Kanälen) verbaut sein, um damit die akustischen Signal des Kommunikationsteilnehmers aufzuzeichnen. Dieser Aufbau erlaubt einzelne Geräusche beziehungsweise Stimmen räumlich zuordnen zu können und dient darüber hinaus zur Rauschunterdrückung. Für interaktive Avatar-Kommunikation kann damit eine zusätzliche Sprachsteuerung realisiert werden. Die Kamera kann weitere Software-Features aufweisen, wie beispielsweise eine Gestensteuerung, eine Sprachsteuerung sowie eine Gesichtserkennung.

Der Kommunikationsclient 102a, 102b kann zum Empfangen der akustischen und visuellen Signale des entsprechenden Kommunikationsteilnehmers 103a, 103b über eine Brille (beispielsweise eine Oculus Rift Brille) mit "head-mounted display" verfügen, d.h. einen am Kopf angebrachten Monitor. Das Display kann zweigeteilt sein, so dass jedes Auge eine Hälfte zu sehen bekommt. Die Brille kann mit einem Ganzkörperanzug kombiniert werden, der mittels Sensoren die Körperbewegungen des Kommunikationsteilnehmers erfasst und darauf basierend den zugehörigen Avatar des Kommunikationsteilnehmers steuert. Der Ganzkörperanzug kann mit dazu passenden Schuhen ausgerüstet sein.

Mit dem in Figur 1 beschriebenen Kommunikationssystem 100 zur interaktiven Avatar-Kommunikation lassen sich vielfältige Vorteile realisieren. So kann die Richtung, aus der ein Kommunikationsteilnehmer gehört wird, von der Position abstammen, an welcher sich der Kommunikationsteilnehmer virtuell befindet, d.h. der Position seines Avatars. Die Richtung kann sich mit dem Standort seines Avatars ändern. Die Reichweite des Gehörten kann mit steigender Distanz nachlassen, ähnlich der realen Umwelt. Flexible Lautstärken, welche Kommunikationsteilnehmer anschlagen, können auch für eine Variation in der Reichweite des Hörbaren sorgen. Dies erzeugt eine reale Klangwahrnehmung und erweitert die taktischen Möglichkeiten der interaktiven Kommunikation. In lauten Umgebungen oder Situationen kann beispielsweise eine höhere Ausgangslautstärke nötig sein, um darüber hinaus gehört zu werden. Ein versehentliches Anwählen einer falschen Gruppe entfällt. Die Stimmlage und Lautstärke passt der Mensch intuitiv einer Situation an. Ein "Vertippen" ist hierbei so gut wie ausgeschlossen. Die Kommunikationsteilnehmer können der interaktiven Kommunikation weiter aktiv folgen während sie kommunizieren.

Durch die Richtung, in die gesprochen wird, wird immer die richtige Person bzw. Gruppe angesprochen. Das Kommunikationssystem 100 zur interaktiven Avatar-Kommunikation verleiht der Kommunikation Emotionen und ein realistische Kommunikationsgefühl, was in Lettern nur schwer darstellbar ist. Die Kommunikationsteilnehmer sind dazu in der Lage, sich gegenüber zu stellen und sich zu unterhalten, sollte Bedarf dazu bestehen. Auch die Lokalisierung von gegenüberstehenden Kommunikationsteilnehmern wird durch akustische Signale ermöglicht.

Ein interaktives Avatar-Kommunikationssystem 100, wie in Figur 1 gezeigt, lässt sich insbesondere auch in vorteilhafter Weise für Online-Computerspiele nutzen, vor allem für solche Spielen, in denen eine große Anzahl an Spielern mitspielt.

Fig. 2 zeigt eine schematische Darstellung der Topologie eines Kommunikationssystems 200 für eine interaktive Avatar-Kommunikation gemäß einer zweiten Ausführungsform.

Das Kommunikationssystem 200 umfasst einen Kommunikationsserver 101 und drei Kommunikationsclients 102a, 102b, 102c. Der Kommunikationsserver 101 entspricht dem oben zu Figur 1 beschriebenen Kommunikationsserver 101. Die Kommunikationsclients 102a, 102b, 102c entsprechen den oben zu Figur 1 beschriebenen Kommunikationsclients 102a, 102b. Die Kommunikationsclients 102a, 102b, 102c können zu dem Kommunikationsserver 101 jeweils erste Kommunikationsverbindungen 104a, 104b, 104c aufbauen. Der Aufbau der Kommunikationsverbindungen 104a, 104b, 104c kann auch vom Kommunikationsserver 101 aus initiiert werden.

Jeder Kommunikationsclient 102a, 102b, 102c kann ferner über eine zweite Kommunikationssoftware verfügen, um damit eine zweite Kommunikationsverbindung (in Fig. 2 nicht dargestellt) zu zumindest einem anderen Kommunikationsclient 102a, 102b, 102c aufzubauen.

Jeder Kommunikationsclient 102a, 102b, 102c ist ausgelegt, akustische Signale (in Fig. 2 nicht dargestellt) eines den jeweiligen Kommunikationsclient nutzenden Kommunikationsteilnehmers der interaktiven Avatar-Kommunikation zu empfangen und die empfangenen akustischen Signale über die erste Kommunikationsverbindung (104a, 104b, 104c) zu dem Kommunikationsserver 101 zu übertragen, wie oben zu Figur 1 beschrieben. Der Kommunikationsserver 101 ist ausgelegt, die empfangenen akustischen Signale basierend auf Positionsdaten eines Avatars der interaktiven Avatar-Kommunikation zu verändern und die veränderten akustischen Signale an den zumindest einen anderen Kommunikationsclient zu übertragen. Der Avatar ist dem Kommunikationsteilnehmer zugeordnet und kann von der Serversoftware der interaktiven Avatar-Kommunikation auf dem Kommunikationsserver emuliert werden, wie oben zu Figur 1 beschrieben.

In dem Ausführungsbeispiel der Figur 2 wird der Laustärkepegel vom Kommunikationsserver 101 geregelt. Die Sprache, von einem Kommunikationsteilnehmer ausgehend, wird an den Kommunikationsserver 101 übertragen und in entsprechender Lautstärke nach Abzug von Hindernissen, d.h. Hindernissen im virtuellen Kommunikationsraum bezüglich des dem Kommunikationsteilnehmer zugeordneten Avatars, an die anderen Kommunikationsclients ausgegeben. Die Berechnung der Änderung des akustischen Signals erfolgt im Kommunikationsserver 101. Der Kommunikationsserver 101 meldet nach entsprechender Verarbeitung der Audiosignale eine Verminderung der Lautstärke in Prozent (von Bel bzw. Dezibel) an die Kommunikationsclients 102a, 102b, 102c. In gleicher Weise können Geräusche übertragen werden.

Fig. 3 zeigt eine schematische Darstellung der Topologie eines Kommunikationssystems 300 für eine interaktive Avatar-Kommunikation gemäß einer dritten Ausführungsform.

Das Kommunikationssystem 300 umfasst einen Kommunikationsserver 101 und drei Kommunikationsclients 102a, 102b, 102c. Der Kommunikationsserver 101 entspricht dem oben zu Figur 1 beschriebenen Kommunikationsserver 101. Die Kommunikationsclients 102a, 102b, 102c entsprechen den oben zu Figur 1 beschriebenen Kommunikationsclients 102a, 102b. Die Kommunikationsclients 102a, 102b, 102c können zu dem Kommunikationsserver 101 jeweils erste Kommunikationsverbindungen 104a, 104b, 104c aufbauen. Der Aufbau der Kommunikationsverbindungen 104a, 104b, 104c kann auch vom Kommunikationsserver 101 aus initiiert werden.

Jeder Kommunikationsclient 102a, 102b, 102c kann ferner über eine zweite Kommunikationssoftware verfügen, um damit eine zweite Kommunikationsverbindung (in Fig. 3 nicht dargestellt) zu zumindest einem anderen Kommunikationsclient 102a, 102b, 102c aufzubauen.

Jeder Kommunikationsclient 102a, 102b, 102c ist ausgelegt, akustische Signale (in Fig. 3 nicht dargestellt) eines den jeweiligen Kommunikationsclient nutzenden Kommunikationsteilnehmers der interaktiven Avatar-Kommunikation zu empfangen und die empfangenen akustischen Signale basierend auf Positionsdaten eines Avatars der interaktiven Avatar-Kommunikation zu verändern. Der Avatar ist dem Kommunikationsteilnehmer zugeordnet und kann von der Serversoftware der interaktiven Avatar-Kommunikation auf dem Kommunikationsserver emuliert werden, wie oben zu Figur 1 beschrieben.

In dem Ausführungsbeispiel der Figur 3 wird der Laustärkepegel vom jeweiligen Kommunikationsclient 102a, 102b, 102c geregelt, indem er die Parameter für etwaige Abzüge vom Kommunikationsserver 101 empfängt. Der Client 102a, 102b, 102c errechnet dann die Ausgangslautstärke, sendet das veränderte akustische Signal, beispielsweise die veränderte Sprache an den Server 101, der diese dann ohne weitere Abzüge an die lokalen Kommunikationsclients weitergibt. Die funktioniert sowohl über die ersten Kommunikationsverbindungen 104a, 104b, 104c (wie in Fig. 3 dargestellt), d.h. mit der Software zum Ausführen der interaktiven Avatar-Kommunikation als auch über die zweiten Kommunikationsverbindungen (in Fig. 3 nicht dargestellt), d.h. mit der Software zum Aufbau der Kommunikation unter den Kommunikationsclients, was beispielswiese eine sogenannte Fremdsoftware sein kann, wie z.B. Teamspeak, da der Server 101 nur die Abzüge in Prozent mitteilt. Die Sprache kann dann auch über andere Programme erfolgen.

Der Kommunikationsserver 101 kann die Koordinaten der anderen Avatare, d.h. der den anderen Kommunikationsteilnehmern zugeordneten Avatare, an die Clients melden, beispielsweise in der gleichen Weise wie oben zu Figur 1 beschrieben. Die Koordinaten der anderen Avatare können für eine gewisse Dauer, die beispielsweise von einem Bewegungsablauf oder einer Szene oder einer Dauer des akustischen Signals abhängig sein kann, auf einer kleinen Übersichtskarte schematisch angezeigt werden. Die Position kann bei Verstummen umgehend verschwinden. Der Client kann darauf basierend die Distanz und die Abzüge selbst berechnen und diese direkt an die anderen Clients weiterleiten, beispielsweise über die zweite Kommunikationsverbindung oder über die erste Kommunikationsverbindung, wie oben zu Figur 1 beschrieben.

Die Änderung des akustischen Signals kann mit den Methoden der Schallfeldausbreitung berechnet werden, beispielsweise wie oben zu Figur 1 beschrieben. Diese Effekte können von dem Kommunikationsserver bzw. den Kommunikationsclients berücksichtigt werden, um eine Änderung der Positionsdaten basierend auf Gegebenheiten des virtuellen Kommunikationsraums zu bestimmen.

Fig. 4 zeigt eine schematische Darstellung der Topologie eines Kommunikationssystems 400 für eine interaktive Avatar-Kommunikation gemäß einer vierten Ausführungsform.

Das Kommunikationssystem 400 umfasst einen Kommunikationsserver 101 und zwei Kommunikationsclients 102a, 102b. Der Kommunikationsserver 101 entspricht dem oben zu Figur 1 beschriebenen Kommunikationsserver 101. Die Kommunikationsclients 102a, 102b entsprechen den oben zu Figur 1 beschriebenen Kommunikationsclients 102a, 102b. Die Kommunikationsclients 102a, 102b können zu dem Kommunikationsserver 101 jeweils erste Kommunikationsverbindungen 104a, 104b aufbauen. Der Aufbau der ersten Kommunikationsverbindungen 104a, 104b kann auch vom Kommunikationsserver 101 aus initiiert werden.

Jeder Kommunikationsclient 102a verfügt ferner über eine zweite Kommunikationssoftware, um damit eine zweite Kommunikationsverbindung 105 zu einem anderen Kommunikationsclient 102b aufzubauen.

Jeder Kommunikationsclient 102a, 102b ist ausgelegt, akustische Signale (in Fig. 4 nicht dargestellt) eines den jeweiligen Kommunikationsclient nutzenden Kommunikationsteilnehmers der interaktiven Avatar-Kommunikation zu empfangen und die empfangenen akustischen Signale basierend auf Positionsdaten eines Avatars der interaktiven Avatar-Kommunikation zu verändern. Der Avatar ist dem Kommunikationsteilnehmer zugeordnet und kann von der Serversoftware der interaktiven Avatar-Kommunikation auf dem Kommunikationsserver emuliert werden, wie oben zu Figur 1 beschrieben.

In dem Ausführungsbeispiel der Figur 4 meldet der Kommunikationsserver 101 die Distanz zwischen den Avataren an die Kommunikationsclients 102a, 102b. Der Client 102a, 102b berechnet anhand der gemeldeten Distanz die ausgehende Lautstärke nach Abzügen von Hindernissen, die dann ohne weitere Abzüge an die anderen Clients 102a, 102b direkt übertragen und ausgegeben wird. Dazu kann die zweite Kommunikationsverbindung 105 genutzt werden. Dies kann von der Software zum Aufbau der Kommunikation unter den Kommunikationsclients 102a, 102b durchgeführt werden, beispielswiese unter Nutzung einer sogenannten Fremdsoftware, wie z.B. Teamspeak.

Der Kommunikationsserver 101 kann die Koordinaten der anderen Avatare, d.h. der den anderen Kommunikationsteilnehmern zugeordneten Avatare, an die Clients melden, beispielsweise in der gleichen Weise wie oben zu Figur 1 beschrieben. Die Koordinaten der anderen Avatare können für eine gewisse Dauer, die beispielsweise von einem Bewegungsablauf oder einer Szene oder einer Dauer des akustischen Signals abhängig sein kann, auf einer kleinen Übersichtskarte schematisch angezeigt werden. Die Position kann bei Verstummen umgehend verschwinden. Der Client kann darauf basierend die Distanz und die Abzüge selbst berechnen und diese direkt an die anderen Clients weiterleiten.

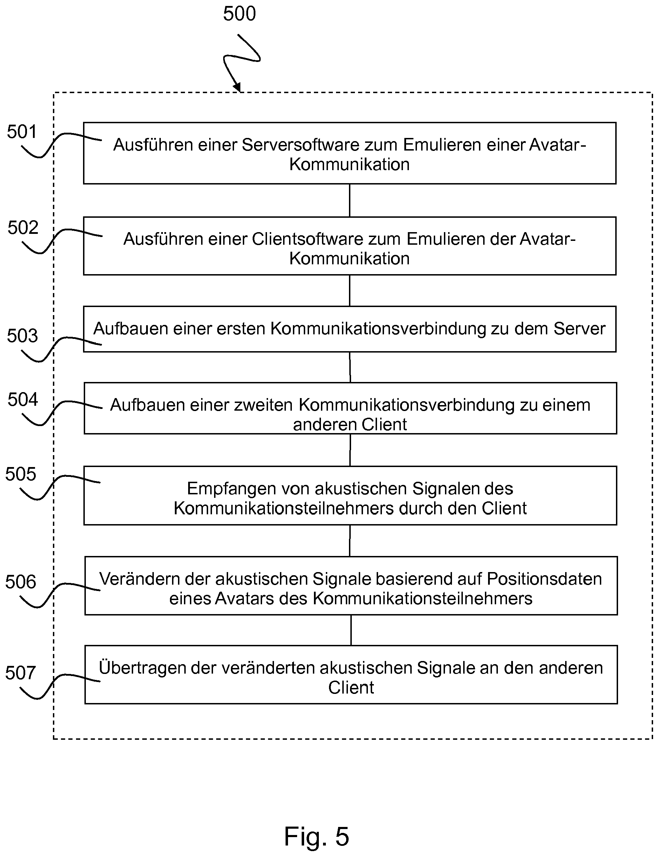

Fig. 5 zeigt eine schematische Darstellung eines Kommunikationsverfahrens 500 für eine interaktive Avatar-Kommunikation gemäß einer Ausführungsform.

Das Verfahren 500 umfasst die folgenden Schritte, die auch in anderer als hier angegebener Reihenfolge ausgeführt werden können: Ausführen 501 einer Serversoftware zum Emulieren einer interaktiven Avatar-Kommunikation auf einem Kommunikationsserver; Ausführen 502 einer jeweiligen Clientsoftware zum Emulieren der interaktiven Avatar-Kommunikation auf einer Mehrzahl von Kommunikationsclients; Aufbauen 503 einer ersten Kommunikationsverbindung zu dem Kommunikationsserver durch jeden der Kommunikationsclients mit einer ersten Kommunikationssoftware zur Kommunikation mit dem Kommunikationsserver; Aufbauen 504 einer zweiten Kommunikationsverbindung zu zumindest einem anderen Kommunikationsclient der Mehrzahl von Kommunikationsclients mit einer zweiten Kommunikationssoftware des jeweiligen Kommunikationsclients zur Kommunikation mit dem zumindest einen anderen Kommunikationsclient; Empfangen 505 von akustischen Signalen eines den jeweiligen Kommunikationsclient nutzenden Kommunikationsteilnehmers der interaktiven Avatar-Kommunikation durch den jeweiligen Kommunikationsclient; Verändern 506 der empfangenen akustischen Signale basierend auf Positionsdaten eines Avatars der interaktiven Avatar-Kommunikation, wobei der Avatar dem Kommunikationsteilnehmer zugeordnet ist und von der Serversoftware der interaktiven Avatar-Kommunikation auf dem Kommunikationsserver emuliert wird; und Übertragen 507 der veränderten akustischen Signale an den zumindest einen anderen Kommunikationsclient.

Das Übertragen 507 der veränderten akustischen Signale an den zumindest einen anderen Kommunikationsclient kann über eine von der ersten Kommunikationssoftware der jeweiligen Kommunikationsclients initiierten ersten Kommunikationsverbindung zu dem Kommunikationsserver erfolgen. Alternativ kann das Übertragen 507 der veränderten akustischen Signale an den zumindest einen anderen Kommunikationsclient über eine von der zweiten Kommunikationssoftware initiierte zweite Kommunikationsverbindung zwischen dem jeweiligen Kommunikationsclient und dem anderen Kommunikationsclient erfolgen.

Das Kommunikationsverfahren 500 kann ferner umfassen: Regeln eines Lautstärkepegels der empfangenen akustischen Signale des Kommunikationsteilnehmers basierend auf den Positionsdaten des entsprechenden Avatars durch den Kommunikationsserver.

Das Kommunikationsverfahren 500 kann ferner umfassen: Aufbauen der zweiten Kommunikationsverbindung zu zumindest einem ausgewählten Kommunikationsclient der Mehrzahl von Kommunikationsclients durch den jeweiligen Kommunikationsclient, insbesondere zu ausgewählten Kommunikationsclients, deren Kommunikationsteilnehmer einer gleichen Gruppe angehören wie der Kommunikationsteilnehmer des jeweiligen Kommunikationsclients.

Die Positionsdaten des dem Kommunikationsteilnehmer zugeordneten Avatars können einen Abstand zu einem anderen Avatar der interaktiven Avatar-Kommunikation angeben, wobei der andere Avatar einem Kommunikationsteilnehmer des zumindest einem anderen Kommunikationsclients zugeordnet ist.

Die Positionsdaten des dem Kommunikationsteilnehmer zugeordneten Avatars können eine Richtung anzeigen, in welcher der Avatar die empfangenen akustischen Signale des Kommunikationsteilnehmers in einem von der Serversoftware der interaktiven Avatar-Kommunikation emulierten virtuellen Kommunikationsraum abgibt.

Die Positionsdaten des dem Kommunikationsteilnehmer zugeordneten Avatars können eine Reichweite angeben, bis zu der die von dem Avatar abgegebenen akustischen Signale in dem virtuellen Kommunikationsraum erfassbar sind.

Die Positionsdaten des dem Kommunikationsteilnehmer zugeordneten Avatars können Umgebungsinformationen des Avatars in dem virtuellen Kommunikationsraum darstellen, insbesondere Gegenstände, die sich in dem virtuellen Kommunikationsraum zwischen dem Avatar und dem anderen Avatar befinden.

Die erste Kommunikationssoftware zum Aufbau der ersten Kommunikationsverbindung kann in die Clientsoftware zum Emulieren der interaktiven Avatar-Kommunikation integriert sein.

Die zweite Kommunikationssoftware zum Aufbau der zweiten Kommunikationsverbindung kann separat zu der Clientsoftware zum Emulieren der interaktiven Avatar-Kommunikation ausgeführt sein.

Die empfangenen akustischen Signale können Mehrkanalsignale, insbesondere Stereosignale umfassen. Die zweite Kommunikationsverbindung kann eine Voice-over-IP Kommunikationsverbindung umfassen.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 5 beschriebene Verfahren 500 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine Serversoftware zum Emulieren einer interaktiven Avatar-Kommunikation auf einem Kommunikationsserver auszuführen; eine jeweilige Clientsoftware zum Emulieren der interaktiven Avatar-Kommunikation auf einer Mehrzahl von Kommunikationsclients auszuführen; eine erste Kommunikationsverbindung zu dem Kommunikationsserver durch jeden der Kommunikationsclients mit einer ersten Kommunikationssoftware zur Kommunikation mit dem Kommunikationsserver aufzubauen; eine zweite Kommunikationsverbindung zu zumindest einem anderen Kommunikationsclient der Mehrzahl von Kommunikationsclients mit einer zweiten Kommunikationssoftware des jeweiligen Kommunikationsclients zur Kommunikation mit dem zumindest einen anderen Kommunikationsclient aufzubauen; akustische Signale eines den jeweiligen Kommunikationsclient nutzenden Kommunikationsteilnehmers der interaktiven Avatar-Kommunikation durch den jeweiligen Kommunikationsclient zu empfangen; die empfangenen akustischen Signale basierend auf Positionsdaten eines Avatars der interaktiven Avatar-Kommunikation zu verändern, wobei der Avatar dem Kommunikationsteilnehmer zugeordnet ist und von der Serversoftware der interaktiven Avatar-Kommunikation auf dem Kommunikationsserver emuliert wird; und die veränderten akustischen Signale an den zumindest einen anderen Kommunikationsclient zu übertragen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationssystem wie in einer der Figuren 1 bis 4 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: interaktives Avatar-Kommunikationssystem gemäß erster Ausführungsform
- 101:: Kommunikationsserver
- 102a:: erster Kommunikationsclient
- 102b:: zweiter Kommunikationsclient
- 102c:: dritter Kommunikationsclient
- 103a:: erster Kommunikationsteilnehmer bzw. Nutzer
- 103b:: zweiter Kommunikationsteilnehmer bzw. Nutzer
- 104a:: erste Kommunikationsverbindung des ersten Kommunikationsclients
- 104b:: erste Kommunikationsverbindung des zweiten Kommunikationsclients
- 104c:: erste Kommunikationsverbindung des dritten Kommunikationsclients
- 105:: zweite Kommunikationsverbindung
- 106a:: erster Avatar, dem ersten Kommunikationsclient zugeordnet
- 106b:: zweiter Avatar, dem zweiten Kommunikationsclient zugeordnet
- 107:: virtueller Kommunikationsraum
- 108a:: Gegenstand im virtuellen Kommunikationsraum
- 108b:: Gegenstand im virtuellen Kommunikationsraum

- 200:: interaktives Avatar-Kommunikationssystem gemäß zweiter Ausführungsform

- 300:: interaktives Avatar-Kommunikationssystem gemäß dritter Ausführungsform

- 400:: interaktives Avatar-Kommunikationssystem gemäß vierter Ausführungsform

- 500:: interaktives Avatar-Kommunikationsverfahren
- 501:: 1. Verfahrensschritt: Ausführen Serversoftware
- 502:: 2. Verfahrensschritt: Ausführen Clientsoftware
- 503:: 3. Verfahrensschritt: Aufbauen erster Kommunikationsverbindung
- 504:: 4. Verfahrensschritt: Aufbauen zweiter Kommunikationsverbindung
- 505:: 5. Verfahrensschritt: Empfangen akustischer Signale
- 506:: 6. Verfahrensschritt: Verändern der akustischen Signale
- 507:: 7. Verfahrensschritt: Übertragen der veränderten akustischen Signale

## Patentansprüche

1. Kommunikationssystem (100, 300, 400) für eine interaktive Avatar-Kommunikation, mit:
einem Kommunikationsserver (101), der ausgelegt ist, eine Serversoftware zum Emulieren einer interaktiven Avatar-Kommunikation auszuführen; und
einer Mehrzahl von Kommunikationsclients (102a, 102b, 102c), die ausgelegt sind, je eine Clientsoftware zum Emulieren der interaktiven Avatar-Kommunikation auszuführen,
wobei jeder Kommunikationsclient (102a, 102b, 102c) über eine erste Kommunikationssoftware verfügt und ausgelegt ist, mit der ersten Kommunikationssoftware eine erste Kommunikationsverbindung (104a, 104b, 104c) zu dem Kommunikationsserver (101) zur Kommunikation mit dem Kommunikationsserver (101) aufzubauen,
wobei jeder Kommunikationsclient (102a, 102b, 102c) ferner über eine zweite Kommunikationssoftware verfügt und ausgelegt ist, mit der zweiten Kommunikationssoftware eine zweite Kommunikationsverbindung (105) zu zumindest einem anderen Kommunikationsclient (102b) der Mehrzahl von Kommunikationsclients zur Kommunikation mit dem zumindest einen anderen Kommunikationsclient (102b) aufzubauen, und
wobei jeder Kommunikationsclient (102a, 102b, 102c) ausgelegt ist, akustische Signale (111a) eines den jeweiligen Kommunikationsclient (102a) nutzenden Kommunikationsteilnehmers (103a) der interaktiven Avatar-Kommunikation zu empfangen und die empfangenen akustischen Signale (111a) basierend auf Positionsdaten eines Avatars (106a) der interaktiven Avatar-Kommunikation zu verändern, wobei der Avatar (106a) dem Kommunikationsteilnehmer (103a) zugeordnet ist und von der Serversoftware der interaktiven Avatar-Kommunikation auf dem Kommunikationsserver (101) emuliert wird.

2. Kommunikationssystem (100, 300, 400) nach Anspruch 1,
wobei der jeweilige Kommunikationsclient (102a) ausgelegt ist, einen Lautstärkepegel der empfangenen akustischen Signale (111a) des Kommunikationsteilnehmers (103a) basierend auf den Positionsdaten des entsprechenden Avatars (106a) zu regeln.

3. Kommunikationssystem (100, 300) nach Anspruch 1 oder 2,
wobei der jeweilige Kommunikationsclient (102a) ausgelegt ist, die Positionsdaten des entsprechenden Avatars (106a) von dem Kommunikationsserver (101) zu empfangen und die veränderten akustischen Signale (111a) über die erste Kommunikationsverbindung (104a) an den Kommunikationsserver (101) zu übertragen; und
wobei der Kommunikationsserver (101) ausgelegt ist, die veränderten akustischen Signale an den zumindest einen anderen Kommunikationsclient (102b) zu übertragen.

4. Kommunikationssystem (100, 400) nach Anspruch 1 oder 2,
wobei der jeweilige Kommunikationsclient (102a) ausgelegt ist, die Positionsdaten des entsprechenden Avatars (106a) von dem Kommunikationsserver (101) zu empfangen und die veränderten akustischen Signale über die zweite Kommunikationsverbindung (105) an den zumindest einen anderen Kommunikationsclient (102b) zu übertragen.

5. Kommunikationssystem (100, 200) für eine interaktive Avatar-Kommunikation, mit:
einem Kommunikationsserver (101), der ausgelegt ist, eine Serversoftware zum Emulieren einer interaktiven Avatar-Kommunikation auszuführen; und
einer Mehrzahl von Kommunikationsclients (102a, 102b, 102c), die ausgelegt sind, je eine Clientsoftware zum Emulieren der interaktiven Avatar-Kommunikation auszuführen,
wobei jeder Kommunikationsclient (102a, 102b, 102c) über eine erste Kommunikationssoftware verfügt und ausgelegt ist, mit der ersten Kommunikationssoftware eine erste Kommunikationsverbindung (104a, 104b) zu dem Kommunikationsserver (101) zur Kommunikation mit dem Kommunikationsserver (101) aufzubauen,
wobei jeder Kommunikationsclient (102a, 102b, 102c) ferner über eine zweite Kommunikationssoftware verfügt und ausgelegt ist, mit der zweiten Kommunikationssoftware eine zweite Kommunikationsverbindung (105) zu zumindest einem anderen Kommunikationsclient (102b) der Mehrzahl von Kommunikationsclients (102a, 102b, 102c) zur Kommunikation mit dem zumindest einen anderen Kommunikationsclient (102b) aufzubauen,
wobei jeder Kommunikationsclient (102a, 102b, 102c) ausgelegt ist, akustische Signale (111a, 111b) eines den jeweiligen Kommunikationsclient (102a) nutzenden Kommunikationsteilnehmers (103a) der interaktiven Avatar-Kommunikation zu empfangen und die empfangenen akustischen Signale (111a) über die erste Kommunikationsverbindung (104a) zu dem Kommunikationsserver (101) zu übertragen, und
wobei der Kommunikationsserver (101) ausgelegt ist, die empfangenen akustischen Signale (111a) basierend auf Positionsdaten eines Avatars (106a) der interaktiven Avatar-Kommunikation zu verändern und die veränderten akustischen Signale an den zumindest einen anderen Kommunikationsclient (102b) zu übertragen, wobei der Avatar (106a) dem Kommunikationsteilnehmer (103a) zugeordnet ist und von der Serversoftware der interaktiven Avatar-Kommunikation auf dem Kommunikationsserver (101) emuliert wird.

6. Kommunikationssystem (100, 200) nach Anspruch 5,
wobei der Kommunikationsserver (101) ausgelegt ist, einen Lautstärkepegel der empfangenen akustischen Signale (111a, 111b) des Kommunikationsteilnehmers (103a, 103b) basierend auf den Positionsdaten des entsprechenden Avatars (106a, 106b) zu regeln.

7. Kommunikationssystem (100, 200) nach einem der vorstehenden Ansprüche,
wobei der jeweilige Kommunikationsclient (102a, 102b, 102c) ausgelegt ist, die zweite Kommunikationsverbindung (105) zu zumindest einem ausgewählten Kommunikationsclient (102b) der Mehrzahl von Kommunikationsclients (102a, 102b, 102c) aufzubauen, insbesondere zu ausgewählten Kommunikationsclients (102b), deren Kommunikationsteilnehmer (103b) einer gleichen Gruppe angehören wie der Kommunikationsteilnehmer (103a) des jeweiligen Kommunikationsclients (102a, 102b, 102c).

8. Kommunikationssystem (100, 200) nach einem der vorstehenden Ansprüche,
wobei die Positionsdaten des dem Kommunikationsteilnehmer (103a) zugeordneten Avatars (106a) einen Abstand zu einem anderen Avatar (106b) der interaktiven Avatar-Kommunikation umfassen, wobei der andere Avatar (106b) einem Kommunikationsteilnehmer (103b) des zumindest einem anderen Kommunikationsclients (102b) zugeordnet ist.

9. Kommunikationssystem (100, 200) nach Anspruch 8,
wobei die Positionsdaten des dem Kommunikationsteilnehmer (103a) zugeordneten Avatars (106a) eine Richtung umfassen, in welcher der Avatar (106a) die empfangenen akustischen Signale (111a) des Kommunikationsteilnehmers (103a) in einem von der Serversoftware der interaktiven Avatar-Kommunikation emulierten virtuellen Kommunikationsraum (107) abgibt.

10. Kommunikationssystem (100, 200) nach Anspruch 9,
wobei die Positionsdaten des dem Kommunikationsteilnehmer (103a) zugeordneten Avatars (106a) eine Reichweite umfassen, bis zu der die von dem Avatar (106a) abgegebenen akustischen Signale (109) in dem virtuellen Kommunikationsraum (107) erfassbar sind.

11. Kommunikationssystem (100, 200) nach Anspruch 10,
wobei die Positionsdaten des dem Kommunikationsteilnehmer (103a) zugeordneten Avatars (106a) Umgebungsinformationen des Avatars (106a) in dem virtuellen Kommunikationsraum (107) darstellen, insbesondere Gegenstände (108a, 108b), die sich in dem virtuellen Kommunikationsraum (107) zwischen dem Avatar (106a) und dem anderen Avatar (106b) befinden.

12. Kommunikationssystem (100, 200) nach einem der vorstehenden Ansprüche,
wobei die erste Kommunikationssoftware zum Aufbau der ersten Kommunikationsverbindung (104a, 104b) in die Clientsoftware zum Emulieren der interaktiven Avatar-Kommunikation integriert ist; und
wobei die zweite Kommunikationssoftware zum Aufbau der zweiten Kommunikationsverbindung (105) separat zu der Clientsoftware zum Emulieren der interaktiven Avatar-Kommunikation ausgeführt ist.

13. Kommunikationssystem (100, 200) nach einem der vorstehenden Ansprüche,
wobei die empfangenen akustischen Signale (111a, 111b) Mehrkanalsignale, insbesondere Stereosignale umfassen.

14. Kommunikationssystem (100, 200) nach einem der vorstehenden Ansprüche,
wobei die zweite Kommunikationsverbindung (105) eine Voice-over-IP Kommunikationsverbindung umfasst.

15. Kommunikationsverfahren (500) für eine interaktive Avatar-Kommunikation, mit:
Ausführen (501) einer Serversoftware zum Emulieren einer interaktiven Avatar-Kommunikation auf einem Kommunikationsserver;
Ausführen (502) einer jeweiligen Clientsoftware zum Emulieren der interaktiven Avatar-Kommunikation auf einer Mehrzahl von Kommunikationsclients;
Aufbauen (503) einer ersten Kommunikationsverbindung zu dem Kommunikationsserver durch jeden der Kommunikationsclients mit einer ersten Kommunikationssoftware zur Kommunikation mit dem Kommunikationsserver;
Aufbauen (504) einer zweiten Kommunikationsverbindung zu zumindest einem anderen Kommunikationsclient der Mehrzahl von Kommunikationsclients mit einer zweiten Kommunikationssoftware des jeweiligen Kommunikationsclients zur Kommunikation mit dem zumindest einen anderen Kommunikationsclient;
Empfangen (505) von akustischen Signalen eines den jeweiligen Kommunikationsclient nutzenden Kommunikationsteilnehmers der interaktiven Avatar-Kommunikation durch den jeweiligen Kommunikationsclient;
Verändern (506) der empfangenen akustischen Signale basierend auf Positionsdaten eines Avatars der interaktiven Avatar-Kommunikation, wobei der Avatar dem Kommunikationsteilnehmer zugeordnet ist und von der Serversoftware der interaktiven Avatar-Kommunikation auf dem Kommunikationsserver emuliert wird; und
Übertragen (507) der veränderten akustischen Signale an den zumindest einen anderen Kommunikationsclient.

## Claims

1. Communication system (100, 300, 400) for an interactive avatar communication, having:
a communication server (101) configured to execute a server software for emulating an interactive avatar communication; and
a plurality of communication clients (102a, 102b, 102c) each configured to execute a client software for emulating the interactive avatar communication,
wherein each communication client (102a, 102b, 102c) has a first communication software and is configured to use the first communication software to set up a first communication link (104a, 104b, 104c) to the communication server (101) for communication with the communication server (101),
wherein each communication client (102a, 102b, 102c) further has a second communication software and is configured to use the second communication software to set up a second communication link (105) to at least one other communication client (102b) from the plurality of communication clients for communication with the at least one other communication client (102b), and
wherein each communication client (102a, 102b, 102c) is configured to receive audible signals (111a) of a communication subscriber (103a) of the interactive avatar communication who uses the respective communication client (102a) and to alter the received audible signals (111a) based on position data of an avatar (106a) of the interactive avatar communication,
the avatar (106a) being associated with the communication subscriber (103a) and being emulated on the communication server (101) by the server software of the interactive avatar communication.

2. Communication system (100, 300, 400) according to Claim 1,
wherein the respective communication client (102a) is configured to regulate a volume level of the received audible signals (111a) of the communication subscriber (103a) based on the position data of the applicable avatar (106a).

3. Communication system (100, 300) according to Claim 1 or 2,
wherein the respective communication client (102a) is configured to receive the position data of the applicable avatar (106a) from the communication server (101) and to transmit the altered audible signals (111a) to the communication server (101) via the first communication link (104a); and
wherein the communication server (101) is configured to transmit the altered audible signals to the at least one other communication client (102b).

4. Communication system (100, 400) according to Claim 1 or 2,
wherein the respective communication client (102a) is configured to receive the position data of the applicable avatar (106a) from the communication server (101) and to transmit the altered audible signals to the at least one other communication client (102b) via the second communication link (105).

5. Communication system (100, 200) for an interactive avatar communication, having:
a communication server (101) that is configured to execute a server software for emulating an interactive avatar communication; and
a plurality of communication clients (102a, 102b, 102c) that are each configured to execute a client software for emulating the interactive avatar communication,
wherein each communication client (102a, 102b, 102c) has a first communication software and is configured to use the first communication software to set up a first communication link (104a, 104b) to the communication server (101) for communication with the communication server (101),
wherein each communication client (102a, 102b, 102c) further has a second communication software and is configured to use the second communication software to set up a second communication link (105) to at least one other communication client (102b) from the plurality of communication clients (102a, 102b, 102c) for communication with the at least one other communication client (102b),
wherein each communication client (102a, 102b, 102c) is configured to receive audible signals (111a, 111b) of a communication subscriber (103a) of the interactive avatar communication who uses the respective communication client (102a) and to transmit the received audible signals (111a) to the communication server (101) via the first communication link (104a), and
wherein the communication server (101) is configured to alter the received audible signals (111a) based on position data of an avatar (106a) of the interactive avatar communication and to transmit the altered audible signals to the at least one other communication client (102b), the avatar (106a) being associated with the communication subscriber (103a) and being emulated on the communication server (101) by the server software of the interactive avatar communication.

6. Communication system (100, 200) according to Claim 5,
wherein the communication server (101) is configured to regulate a volume level of the received audible signals (111a, 111b) of the communication subscriber (103a, 103b) based on the position data of the applicable avatar (106a, 106b).

7. Communication system (100, 200) according to one of the preceding claims,
wherein the respective communication client (102a, 102b, 102c) is configured to set up the second communication link (105) to at least one selected communication client (102b) from the plurality of communication clients (102a, 102b, 102c), particularly to selected communication clients (102b) whose communication subscribers (103b) belong to a same group as the communication subscriber (103a) of the respective communication client (102a, 102b, 102c).

8. Communication system (100, 200) according to one of the preceding claims,
wherein the position data of the avatar (106a) associated with the communication subscriber (103a) comprise a distance from another avatar (106b) of the interactive avatar communication, the other avatar (106b) being associated with a communication subscriber (103b) of the at least one other communication client (102b).

9. Communication system (100, 200) according to Claim 8,
wherein the position data of the avatar (106a) associated with the communication subscriber (103a) comprise a direction in which the avatar (106a) delivers the received audible signals (111a) of the communication subscriber (103a) in a virtual communication space (107) emulated by the server software of the interactive avatar communication.

10. Communication system (100, 200) according to Claim 9,
wherein the position data of the avatar (106a) associated with the communication subscriber (103a) comprise a range up to which the audible signals (109) delivered by the avatar (106a) can be captured in the virtual communication space (107).

11. Communication system (100, 200) according to Claim 10,
wherein the position data of the avatar (106a) associated with the communication subscriber (103a) represent surroundings information of the avatar (106a) in the virtual communication space (107), particularly items (108a, 108b) that are in the virtual communication space (107) between the avatar (106a) and the other avatar (106b).

12. Communication system (100, 200) according to one of the preceding claims,
wherein the first communication software for setting up the first communication link (104a, 104b) is integrated in the client software for emulating the interactive avatar communication; and
wherein the second communication software for setting up the second communication link (105) is embodied separately from the client software for emulating the interactive avatar communication.

13. Communication system (100, 200) according to one of the preceding claims,
wherein the received audible signals (111a, 111b) comprise multichannel signals, particularly stereo signals.

14. Communication system (100, 200) according to one of the preceding claims,
wherein the second communication link (105) comprises a Voice-Over-IP communication link.

15. Communication method (500) for an interactive avatar communication, involving:
executing (501) a server software for emulating an interactive avatar communication on a communication server,
executing (502) a respective client software for emulating the interactive avatar communication on a plurality of communication clients;
setting up (503) a first communication link to the communication server by each of the communication clients using a first communication software for communication with the communication server;
setting up (504) a second communication link to at least one other communication client from the plurality of communication clients using a second communication software of the respective communication client for communication with the at least one other communication client;
receiving (505) audible signals of a communication subscriber of the interactive avatar communication who uses the respective communication client by the respective communication client;
altering (506) the received audible signals based on position data of an avatar of the interactive avatar communication, the avatar being associated with the communication subscriber and being emulated on the communication server by the server software of the interactive avatar communication; and
transmitting (507) the altered audible signals to the at least one other communication client.

## Revendications

1. Système de communication (100, 300, 400) destiné à une communication interactive par avatar, comportant :
un serveur de communication (101) conçu pour exécuter un logiciel serveur permettant d'émuler une communication interactive avec avatar ;
et une pluralité de clients de communication (102a, 102b, 102c) dont chacun est conçu pour exécuter un logiciel client afin d'émuler la communication interactive par avatar,
dans lequel chaque client de communication (102a, 102b, 102c) possède un premier logiciel de communication et est conçu pour établir au moyen du premier logiciel de communication une première liaison de communication (104a, 104b, 104c) avec le serveur de communication (101) pour communiquer avec le serveur de communication (101),
dans lequel chaque client de communication (102a, 102b, 102c) possède en outre un second logiciel de communication et est conçu pour établir au moyen du second logiciel de communication une deuxième liaison de communication (105) avec au moins un autre client de communication (102b) de la pluralité de clients de communication pour communiquer avec au moins un autre client de communication (102b), et
dans lequel chaque client de communication (102a, 102b, 102c) est conçu pour recevoir des signaux acoustiques (111a) d'un correspondant de communication (103a) utilisant le client de communication respectif (102a) de la communication interactive par avatar et pour modifier les signaux acoustiques (111a) reçus sur la base de données de position d'un avatar (106a) de la communication interactive par avatar, dans lequel l'avatar (106a) est associé au correspondant de communication (103a) et est émulé par le logiciel serveur de la communication interactive par avatar sur le serveur de communication (101).

2. Système de communication (100, 300, 400) selon la revendication 1,
dans lequel le client de communication (102a) respectif est conçu pour réguler un niveau de volume des signaux acoustiques (111a) reçus du correspondant de communication (103a) sur la base des données de position de l'avatar (106a) correspondant.

3. Système de communication (100, 300) selon la revendication 1 ou 2,
dans lequel le client de communication (102a) respectif est conçu pour recevoir les données de position de l'avatar (106a) correspondant du serveur de communication (101) et pour transmettre les signaux acoustiques (111a) modifiés par l'intermédiaire de la première liaison de communication (104a) au serveur de communication (101) ; et
dans lequel le serveur de communication (101) est conçu pour transmettre les signaux acoustiques modifiés audit au moins un autre client de communication (102b).

4. Système de communication (100, 400) selon la revendication 1 ou 2,
dans lequel le client de communication (102a) respectif est conçu pour recevoir les données de position de l'avatar (106a) correspondant du serveur de communication (101) et pour transmettre les signaux acoustiques modifiés par l'intermédiaire de la seconde liaison de communication (105) à au moins un autre client de communication (102b).

5. Système de communication (100,200) destiné à une communication interactive par avatar, comportant :
un serveur de communication (101) conçu pour exécuter un logiciel serveur afin d'émuler une communication interactive par avatar ; et
une pluralité de clients de communication (102a, 102b, 102c), dont chacun est conçu pour exécuter un logiciel client afin d'émuler une communication interactive par avatar,
dans lequel chaque client de communication (102a, 102b, 102c) possède un premier logiciel de communication et est conçu pour établir une première liaison de communication (104a, 104b) avec le serveur de communication (101) pour communiquer avec le serveur de communication (101),
dans lequel chaque client de communication (102a, 102b, 102c) possède en outre un second logiciel de communication et est conçu pour établir une seconde liaison de communication (105) avec au moins un autre client de communication (102b) de la pluralité de clients de communication (102a, 102b, 102c) pour communiquer avec ledit au moins un autre client de communication (102b),
dans lequel chaque client de communication (102a, 102b, 102c) est conçu pour recevoir des signaux acoustiques (111a, 111b) d'un correspondant de communication (103a) utilisant le client de communication respectif (102a, 111b) de la communication interactive par avatar et pour transmettre les signaux acoustiques (111a) reçus par l'intermédiaire de la première liaison de communication (104a) avec le serveur de communication (101), et
dans lequel le serveur de communication (101) est conçu pour modifier les signaux acoustiques (111a) reçus sur la base des données de position d'un avatar (106a) de la communication interactive par avatar et pour transmettre les signaux acoustiques modifiés audit au moins un autre client de communication (102b), dans lequel l'avatar (106a) est associé au correspondant de communication (103a) et est émulé par le logiciel serveur de la communication interactive par avatar sur le serveur de communication (101).

6. Système de communication (100, 200) selon la revendication 5,
dans lequel le serveur de communication (101) est conçu pour réguler un niveau de volume des signaux acoustiques (111a, 111b) reçus du correspondant de communication (103a, 103b) sur la base des données de position de l'avatar (106a, 106b) correspondant.

7. Système de communication (100, 200) selon l'une quelconque des revendications précédentes,
dans lequel le client de communication (102a, 102b, 102c) respectif est conçu pour établir la seconde liaison de communication (105) avec au moins un client de communication (102b) sélectionné parmi la pluralité de clients de communication (102a, 102b, 102c), en particulier avec des clients de communication (102b) sélectionnés dont les correspondants de communication (103b) appartiennent au même groupe que le correspondant de communication (103a) du client de communication (102a, 102b, 102c) respectif.

8. Système de communication (100, 200) selon l'une quelconque des revendications précédentes,
dans lequel les données de position de l'avatar (106b) associé au correspondant de communication (103a) comprennent une distance d'un autre avatar (106b) de la communication interactive par avatar, dans lequel l'autre avatar (106b) est associé à un correspondant de communication (103b) dudit au moins un autre client de communication (102b).

9. Système de communication (100, 200) selon la revendication 8,
dans lequel les données de position de l'avatar (106a) associé au correspondant de communication (103a) comprennent une direction dans laquelle l'avatar (106a) délivre les signaux acoustiques (111a) reçus du correspondant de communication (103a) dans un espace de communication virtuel (107) émulé par le logiciel serveur de la communication interactive par avatar.

10. Système de communication (100, 200) selon la revendication 9,
dans lequel les données de position de l'avatar (106a) associé au correspondant de communication (103a) comprennent une portée jusqu'à laquelle les signaux acoustiques (109) délivrés par l'avatar (106a) peuvent être détectés dans l'espace de communication virtuel (107) .

11. Système de communication (100, 200) selon la revendication 10,
dans lequel les données de position de l'avatar (106a) associé au correspondant de communication (103a) représentent des informations d'environnement de l'avatar (106a) dans l'espace de communication virtuel (107), en particulier des objets (108a, 108b) qui se trouvent dans l'espace de communication virtuel (107) entre l'avatar (106a) et l'autre avatar (106b).

12. Système de communication (100, 200) selon l'une quelconque des revendications précédentes,
dans lequel le premier logiciel de communication est intégré au logiciel client pour établir la première liaison de communication (104a, 104b) afin d'émuler la communication interactive par avatar ; et
dans lequel le second logiciel de communication est exécuté pour établir séparément la seconde liaison de communication (105) avec le logiciel client afin d'émuler la communication interactive par avatar.

13. Système de communication (100, 200) selon l'une quelconque es revendications précédentes,
dans lequel les signaux acoustiques (111a, 111b) reçus comprennent des signaux multicanaux, en particulier des signaux stéréo.

14. Système de communication (100, 200) selon l'une quelconque des revendications précédentes,
dans lequel la seconde liaison de communication (105) comprend une liaison de communication du type voix sur IP.

15. Procédé de communication (500) destiné à une communication interactive par avatar, comprenant :
l'exécution (501) d'un logiciel serveur afin d'émuler une communication interactive par avatar sur un serveur de communication ;
l'exécution (502) de chaque logiciel client afin d'émuler la communication interactive par avatar sur une pluralité de clients de communication ;
l'établissement (503) d'une première liaison de communication avec le serveur de communication par chacun des clients de communication à l'aide d'un premier logiciel de communication pour communiquer avec le serveur de communication ;
l'établissement (504) d'une seconde liaison de communication avec au moins un autre client de communication de la pluralité de clients de communication à l'aide d'un second logiciel de communication du client de communication respectif pour communiquer avec ledit au moins un autre client de communication ;
la réception (505) par le client de communication respectif de signaux acoustiques d'un correspondant de communication utilisant le client de communication respectif de la communication interactive par avatar ;
la modification (506) des signaux acoustiques reçus sur la base de données de position d'un avatar d'une communication interactive par avatar, dans lequel l'avatar est associé au correspondant de communication et est émulé par le logiciel serveur de la communication interactive par avatar sur le serveur de communication ; et
la transmission (507) des signaux acoustiques modifiés audit au moins un autre client de communication.
